# EUROPEAN PATENT APPLICATION

(11) **EP 3 203 370 A1**
(43) Date of publication of application: **09.08.2017**
(21) Application number: 17152972.0
(22) Date of filing: 25.01.2017
(51) Int. Cl.: G06F 3/12

(54) **SYSTEM, APPARATUS AND METHOD FOR EASY ACCESS TO CASUAL OR GUEST PRINTING**

(30) Priority: 04.02.2016 US 201615015619
(71) Applicant: Ricoh Company, Ltd., Tokyo 143-8555 (JP)
(72) Inventor: HAAPANEN, Tom, West Caldwell, NJ New Jersey 07006 (US); CECILE, Matthew, West Caldwell, NJ New Jersey 07006 (US)
(74) Representative: Schwabe - Sandmair - Marx

(57) **Abstract**

Systems, apparatuses, methodologies and other tools may be provided to facilitate operation of an output device that includes printing functionality, by automated handshaking between a user's mobile device and a guest print hotspot device, when the mobile device is within short-range operation range of the hotspot device.

## Description

This disclosure relates to systems, apparatuses, methodologies and other tools for guest printing, and more specifically, tools including provisions to facilitate guest printing via short-range communication.

### BACKGROUND

In the current information age, information technology (IT) tools are extensively used, typically in a network environment, in enterprises and other organizations in order to facilitate output, communication and/or processing of information, such as documents and data, and there are often discussions of the desirableness of a paperless society. Notwithstanding the aforementioned discussions, there remains a great need by users of computers and other terminal devices for printing functionality. Therefore, devices having printing functionality, such as printers, copiers, multi-function devices (MFDs), etc., continue to play a significant role in information technology (IT). Further, with the ubiquity of mobile devices (e.g., smartphones or other handheld electronic devices, tablet computers, laptop computers, etc.), operation of such mobile devices now have a large and integrated role in the daily activities of the typical user.

Many organizations (e.g., companies, government agencies, public facilities, etc.) would like to offer printing services to guests and visitors, either free of charge or at a modest price. The documents to be printed may be stored locally on the device, or remotely in the "cloud" or on an email server, for example. However, conventional provisions for guest printing typically necessitate connecting to the organization's wired or wireless network in order to access the printing services. Such approach presents problems in managing access, distributing passwords and the relatively complex steps required to set up (and possibly remove) a temporary network connection in order to provide casual printing.

Improvements to facilitate casual or guest printing are needed.

### SUMMARY

Various tools (e.g., systems, apparatuses, methodologies, computer programs, etc.) are proposed herein to facilitate guest or casual printing from a mobile device, including automating the communication process, via automated handshake between the mobile device and a guest print hotspot device, by means of short-range communication (e.g., by Bluetooth, or Bluetooth Low Energy (BLE), or other near field communication), or other peer-to-peer network communication, etc.

In a preferred approach, complementary components are deployed on the mobile device and the guest print hotspot device, respectively (e.g., system component on the mobile device and system component on the guest print hotspot device), such that the automated handshaking is transparent to the user of the mobile device. The user is merely notified that printing facility is available, and then the user can simply select the document to be printed, and submit it to the guest or casual printing provision with no questions asked. The transparent connection process for guest printing avoids requiring the user to function as an administrator to configure the mobile terminal in a manner (such as by installing thereon an appropriate printer driver) that is conventionally needed when the terminal is to print to an output device for the first time.

In another aspect, the mobile device and the hotspot device are generally unaware of each other when they are out of range of the other. On the other hand, the mobile device is configured to automatically detect and connect to the casual printing hotspot when in close proximity to the hotspot device (which is associated with one or more output devices), and the hotspot device is configured to announce that print functionality is available. When the mobile device approaches a hotspot device, the system component on the mobile device automatically detects the presence of the hotspot when it reaches the range of the hotspot. Once in range, the system component on the mobile device proceeds to automatically establish a connection to the hotspot and confirm that printing services are available. However, the connection is not persistent, and is terminated when the mobile device becomes out-of-range of the hotspot. The hotspot connection does not support full network connectivity, so that the risk to the organization's core network assets is minimized.

In another aspect, once the mobile device is within the operation range of the hotspot device, the mobile device proceeds to contact the hotspot, and the devices conduct mutual verification of each other. For example, the mobile device sends the hotspot an authentication token containing a unique identifier of the mobile device, and the hotspot device enables the sending of print jobs. Upon verification, the mobile device notifies the user with a message indicating that guest printing services are available. In the case that the user has a need to print, the user can then proceed with operation of the mobile device to print a document. For example, the user can open the document and then select the "print" function in the corresponding application, or as another example, the user can open a printing application and select the document to be printed. When needed, the mobile device may render the document into printable form and then send it to the hotspot, or it may transmit the original document to the hotspot, for rendering to printable form at a later time. Once the hotspot has received the document to be printed, it confirms receipt to the printing component on the mobile device.

In another aspect, if the hotspot has been configured for "direct" or "automatic" printing, it immediately renders the print job (if it was not previously rendered by the mobile device), and then transmit it to the output device. The hotspot then notifies the mobile device that the printing has started, and the location of the output device, and may optionally also notify the mobile device that the printing has completed. The mobile device can be configured to notify, in turn, the same information to the user. If multiple output devices are present and configured, the user may be allowed to choose an output device as they are selecting print options.

In another aspect, if the hotspot has been configured for "secure" or "pull" printing, the print job is not printed immediately. Instead, the hotspot transmits the print job to the print server, along with the mobile device's unique identifier, and in response, the server confirms receipt to the hotspot, and provides a code identifying the user's print job. If the same mobile device submitted one or more jobs previously, the server may provide the same code, enabling multiple print jobs to be identified with a single code. The server will then store the print job similar to normal print jobs, except that the job is marked as a guest print job, while retaining the unique device identifier and the code associated with the print job. In the meantime, the hotspot notifies the mobile device of the same and provides the code to the mobile device, and the mobile device, in turn, notifies the same information to the user. In order to release the secure print job, the user goes to an output device connected to the server. Actual authentication at the output device is not required, but either the mobile device or the user needs to provide the output device with the information (e.g., code) regarding the print job(s) to be released for printing.

In another aspect, if the mobile device is compatible with the output device, it will connect automatically when the user approaches the output device, and in such scenario the mobile device indicates that guest printing is requested, and sends the output device its unique identifier and/or the code for the print job previously sent by the user. The output device in turn communicates with the server to retrieve information about the jobs held by the server (or other remote servers) for this mobile device, utilizing the received device identifier or by locating them using the code for each print job. Once it has received information about those jobs, the output device sends such job information to the mobile device. The mobile device may be configured to immediately release all such jobs, in which case it immediately sends a request to the output device (and through the output device, indirectly, to the server), to print those jobs. Alternatively, if not configured for immediate release, the mobile device displays the list of such jobs for the user, and allows the user to select which jobs to print, to delete, or to leave waiting on the server. At that point the mobile device sends the request to the output device (and through the output device, indirectly, to the server), to print those jobs. If fee-based printing is configured, the user is prompted with total printing cost before final printing and asked to confirm. Upon confirmation, the user is asked to provide payment via some secure means. Successful processing of payment triggers final release of the print jobs.

In another aspect, if the mobile device is not compatible with the output device, the user can utilize an operation panel of the output device, or a user interface on an external authentication device (such as a tablet or keypad, connected to the output device in some way), to select (by pressing a key, pressing a button, swiping or some other way) to use guest printing. In response, the output device (or external authentication device) prompts the user to enter a code for the guest printing, and upon entry of the code, the output device communicates with the server, and the server locates the print jobs in its own queue or on a remote server's print queue, using the codes for each print job to identify them. The output device may be configured to immediately release all such jobs, in which case it will immediately send a request to the server to print those jobs. Alternatively, if not configured for immediate release, the output device can display the list of such jobs for the user, and allow the user to select which jobs to print, to delete, or to leave waiting on the server. At that point the output device requests the server to print those jobs.

In another example, a cloud-enabled configuration is employed, and upon verification, the hotspot provides an internet accessible address for an application server in the clouds. In another scenario, the hotspot simply provides an address of the cloud server to any interested mobile device. In any event, the mobile device employs the received address to connect to the cloud server and transmits a print job to that server. In response, the server then confirms receipt of the job to the mobile component.

### BRIEF DESCRIPTION OF THE DRAWINGS

The aforementioned and other aspects, features and advantages can be more readily understood from the following detailed description with reference to the accompanying drawings wherein:
**Fig. 1A** shows a block diagram of a system configured for guest or casual printing, according to an embodiment of this disclosure;
**Fig. 1B** shows a block diagram of a system configured for guest or casual printing, according to another embodiment of this disclosure;
**Fig. 1C** shows a block diagram of a system configured for guest or casual printing, according to another embodiment of this disclosure;
**Fig. 1D** shows a block diagram of a system configured for guest or casual printing, according to another embodiment of this disclosure;
**Fig. 2** shows a block diagram of a configuration of a typical computing device;
**Fig. 3** shows a block diagram of a configuration of a typical mobile device;
**Fig. 4** shows a block diagram of a configuration of a typical multi-function output device;
**Fig. 5** shows a block diagram of a configuration of a guest print hotspot device;
**Fig. 6** shows a schematic diagram of an example of communication flow in the system shown in Fig. 1C;
**Fig. 7** shows a schematic diagram of an example of communication flow in the system shown in Fig. 1C;
**Fig. 8** shows a schematic diagram of an example of communication flow in the system shown in Fig. 1D;
**Fig. 9** shows a schematic diagram of an example of communication flow in the system shown in Fig. 1C;
**Fig. 10** shows a schematic diagram of an example of communication flow in the system shown in Fig. 1C;
**Fig. 11** shows a flow chart of a method that can be performed in any of the systems shown in Figs. 1A-1D;
**Figs. 12A-12E** show examples of interactions between a mobile device and an output device, in any of the systems shown in Figs. 1A-1D;
**Figs. 13A-13D** show examples of user interface screens that can be provided by an output device, in any of the systems shown in Figs. 1A-1D;
**Figs. 14A** **and** **14B** show examples of interactions between a mobile device and an output device, in any of the systems shown in Figs. 1A-1D;
**Figs. 15A-15D** show examples of user interface screens that can be provided by an output device, in any of the systems shown in Figs. 1A-1D;
**Fig. 16** shows a flow chart of a method that can be performed in any of the systems shown in Figs. 1A-1D;
**Figs. 17A-17D** show examples of user interface screens that can be provided by an output device, in any of the systems shown in Figs. 1A-1D;
**Fig. 18** shows a flow chart of a method that can be performed in any of the systems shown in Figs. 1A-1D;
**Figs. 19A-19D** show examples of user interface screens that can be provided by an output device, in any of the systems shown in Figs. 1A-1D; and
**Figs. 20A** **and** **20B** show examples of interactions between a mobile device and an output device, in any of the systems shown in Figs. 1A-1D;

### DETAILED DESCRIPTION

In describing preferred embodiments illustrated in the drawings, specific terminology is employed herein for the sake of clarity. However, this disclosure is not intended to be limited to the specific terminology so selected and it is to be understood that each specific element includes all technical equivalents that operate in a similar manner. In addition, a detailed description of known functions and configurations is omitted from this specification when it may obscure the inventive aspects described herein. Various tools to facilitate guest or casual printing are discussed herein, with reference to examples. It should be appreciated by those skilled in the art that any one or more of such tools may be embedded in any of various ways, and thus while various examples are discussed herein, the inventive aspects of this disclosure are not limited to such examples described herein.

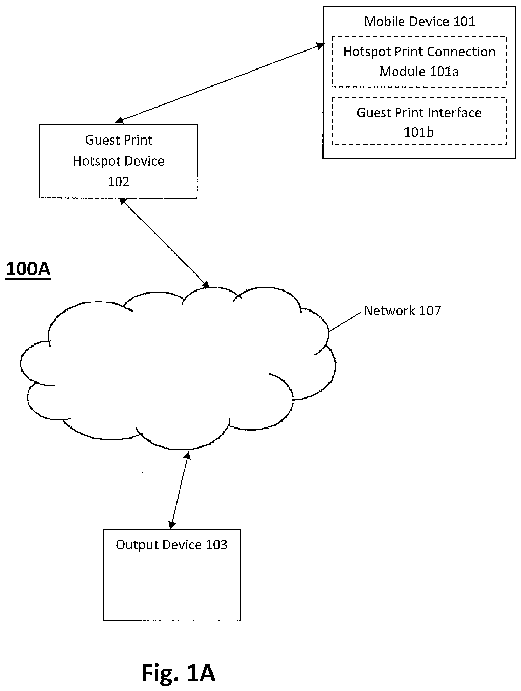

Referring now to the drawings, wherein like reference numerals designate identical or corresponding parts throughout the several views, **Fig. 1A** shows schematically a system 100A, according to an exemplary embodiment, including mobile device 101, guest print hotspot device 102 and output device 103, the guest print hotspot device 102 and the output device 103 being interconnected by a network 107.

The mobile apparatus 101 can be any computing device, including but not limited to a tablet, laptop or notebook computer, a PDA (personal digital assistant), a mobile phone or handset, another mobile information terminal, etc., that can be configured to include a hotspot print connection module 101a and a guest print interface 101b.

The hotspot print connection module 101a is configured to detect the presence of the guest print hotspot device 102 when the guest print hotspot device 102 is within a short-range point-to-point communication range of the mobile device 101. The short-range point-to-point communication range may be different from a range of conventional wireless network communication. In other words, while the short-range point-to-point communication can be performed wirelessly like normal wireless communication, the short-range point-to-point communication range may be smaller than the normal wireless communication range. In order for the mobile device to perform communication with another device using a protocol associated with short-range point-to-point communication, the mobile device and the other device may need to be physically in a closer proximity than when normal wireless communication is used. Thus, even if the other device is within the normal wireless communication range of the mobile device, the mobile device does not communicate with the other device, and instead waits for the other device to be in the short-range operation range of the mobile apparatus or *vice versa.*

Once the hotspot print connection module 101a determines that the guest print hotspot device 102 is within the short-range point-to-point communication range of the mobile device 101, the hotspot print connection module 101a performs an automated mutual verification process with the guest print hotspot device 102. In other words, the mobile device 101 and the guest print hotspot device 102 may exchange information regarding each device. For example, each device may exchange media access control (MAC) addresses, Internet protocol (IP) addresses, unique identifiers, available functions, features, etc. In one exemplary embodiment, the guest print hotspot device 102 may inform the mobile device 101 that there is print functionality available at the location that the guest print hotspot device 102 is disposed at. Thus, the user of the mobile device may perform printing.

In addition, the hotspot print connection module 101a may also send a token containing (a) a unique identifier (e.g., MAC address, IP address, randomly generated series of numbers and letters, etc.) of the mobile device 101 and a validation code (e.g., checksum) to the guest print hotspot device 102. Such unique identifier allows the guest print hotspot device to determine the identity of the mobile device 101 when performing guest printing.

The guest print interface 101b may be an interface that permits the user of the mobile device 101 to access the features of the guest print hotspot device 102 and any output devices (e.g., output device 103) associated with the guest print hotspot device 102. For example, the guest print interface 101b may inform the user that there is print functionality associated with the guest print hotspot device 102. Further, the guest print interface 101b may receive (i) a selection of one or more documents by the user of the mobile device 101 to be printed and (ii) a selection of an output device to have the document printed. In one exemplary embodiment, the guest print interface 101b may present the user of the mobile device 101 with a release code (e.g., a short series of numbers and letters). The release code is to be inputted into a user interface of an output device selected by the user in order to cause the output device to perform printing of the selected document. In another exemplary embodiment, the guest print interface 101b may also accept payment information from the user of the mobile device 101.

The guest print hotspot device 102 is associated with one or more output devices and may be any device (e.g., router, switch, etc.) that can perform short-range point-to-point communication with one or more mobile devices. Once the mobile device 101 is within the short-range point-to-point communication range of the guest print hotspot device 102, the guest print hotspot device 102 communicates the mobile device 101 by performing a mutual verification process. Next, the guest print hotspot device 102 informs the mobile device 101 that the user of the mobile device 101 can perform printing at one or more of the output devices associated with the guest print hotspot device 102. It should be noted that the guest print hotspot device 102 does not need to be visible to the user of a mobile device 101. In other words, the guest print hotspot device 102 can be at a hidden location (e.g., in the ceiling, underground, in a wall, etc.).

In the case that the user is interested in printing from the guest print hotspot device 102, the guest print hotspot device 102 may receive one or more documents from the user of the mobile device 101. In an exemplary embodiment, the guest print hotspot device 102 may determine automatically an output device to send the one or more documents received from the user. In another exemplary embodiment, the guest print hotspot device 102 may send a release code to the mobile device 101.

The output device 103 may be, for example, an MFP, a printer, a facsimile machine, a scanner, etc. Further, the terms "printer" and "printer device" are used hereinafter generically to include any output device having a printing or plotting functionality, and include multifunction devices having a copy and/or scanning functionality in addition to the printing or plotting functionality.

The network 107 can be a local area network, a wide area network or any type of network such as an intranet, an extranet (for example, to provide controlled access to external users, for example through the Internet), a private or public cloud network, the Internet, etc., or a combination thereof. In addition, the network 107 preferably uses TCP/IP (Transmission Control Protocol/Internet Protocol), but other protocols such as SNMP (Simple Network Management Protocol) and HTTP (Hypertext Transfer Protocol) can also be used. How devices can connect to and communicate over networks is well known in the art and is discussed for example, in "How Networks Work", by Frank J. Derfler, Jr. and Les Freed (Que Corporation 2000) and "How Computers Work", by Ron White, (Que Corporation 1999), the entire contents of each of which are incorporated herein by reference.

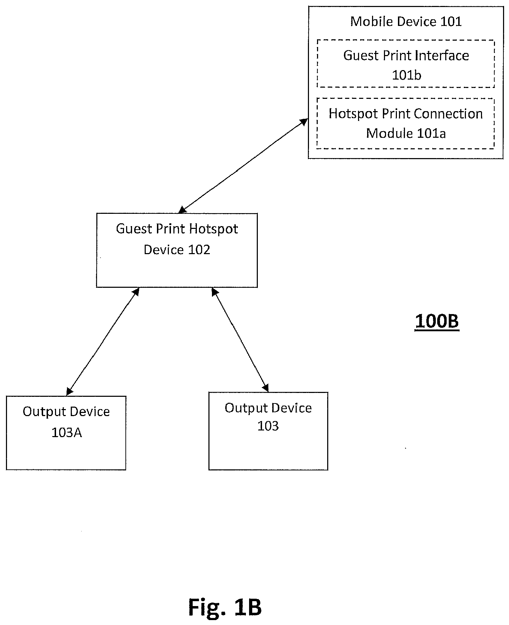

**Fig. 1B** shows schematically a system 100B, according to another exemplary embodiment. The system 100B is similar to the system 100A except that in the system 100B, output device 103 and output device 103A are connected to the guest print hotspot device 102. As discussed herein, the guest print hotspot device 102 can be configured to provide the mobile device with a choice of output devices that are associated with the guest print hotspot device 102, and the mobile device can be configured to relay such choice to the user. The output device 103 and output device 103A are interchangeable.

Further, while other embodiments show the guest print hotspot device 102 as being connected to output devices through a network, such network connection is not a limitation therein, and one or more output devices can be connected directly to the guest print hotspot device 102.

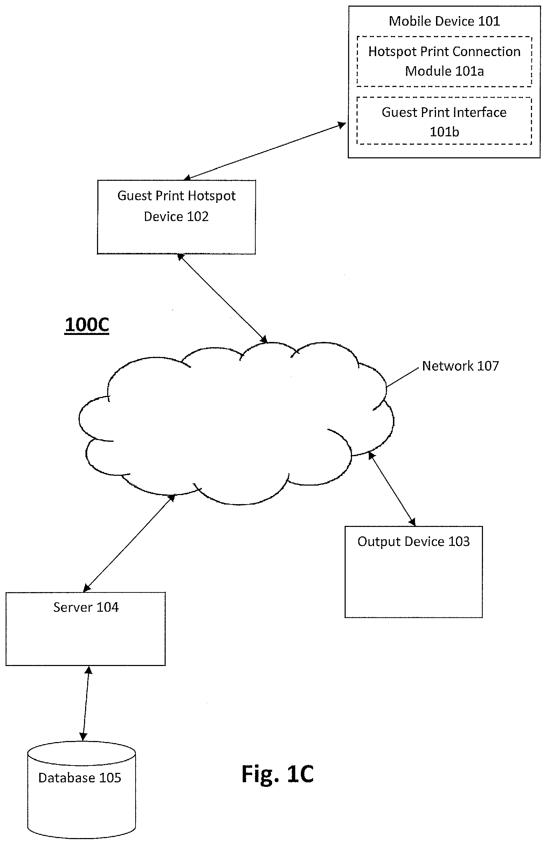

**Fig. 1C** shows schematically a system 100C, according to another exemplary embodiment. The system 100C is similar to the system 100A except that the system 100C additionally includes a server 104 and database 105.

The server 104 may communicate with the guest print hotspot device 102 to facilitate the use of the output device 103. The server 104 may perform a variety of tasks. In one exemplary embodiment, the server 104 may receive documents to be printed from the guest print hotspot device 102, generate a print job from the received documents and send the print job to an output device. In another exemplary embodiment, the server 104 may receive (in addition to the documents) a mobile device identifier from the guest print hotspot device 102. The server 104 may generate a print job code (for releasing a print job from the output device) and associate such print job code with the mobile device identifier. In yet another exemplary embodiment, the server 104 may also store (i) a list of print jobs associated with the mobile device identifier and (ii) their associated costs.

The database 105 stores one or more items received from the server 104. For example, the database 105 may store one or more of the following: list of print jobs, print job code, mobile device identifiers, costs of print jobs, etc. Further, the database 105 may retrieve the aforementioned items when requested by the server 104.

Otherwise, operations of the elements of the system 100C are similar to those discussed in connection with corresponding elements of the system 100A of Fig. 1A.

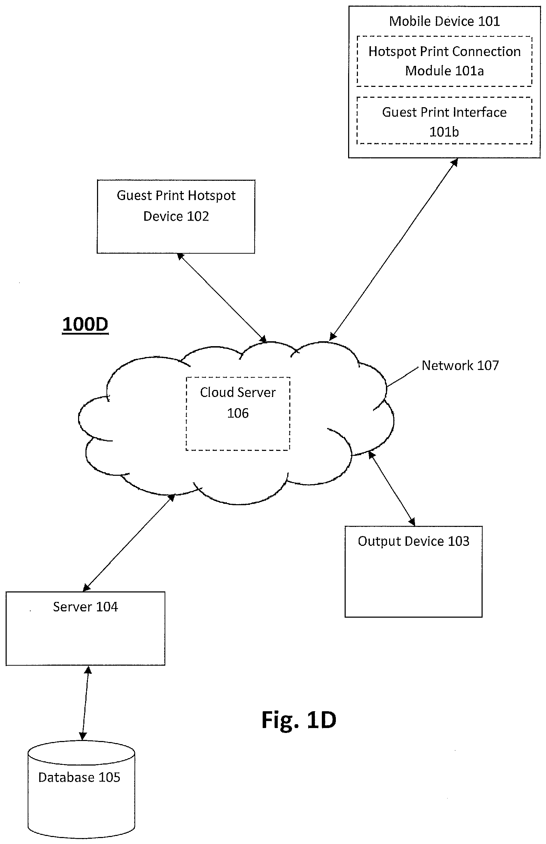

**Fig. 1D** shows schematically a system 100D, according to another exemplary embodiment. The system 100D is similar to the system 100C except that the system 100D additionally includes a cloud server 106.

The cloud server 106 may perform one or more functionalities of the guest print hotspot device 102. For example the cloud server 106 may receive documents and mobile device identifiers from one or more mobile devices. Further, it should be noted that the mobile device 101 does not need to be in a short-range point-to-point communication range with the cloud server 106 to perform communication. In other words, the mobile device 101 may simply utilize conventional wireless communication protocols (e.g., 802.11) to communicate with the cloud server 106.

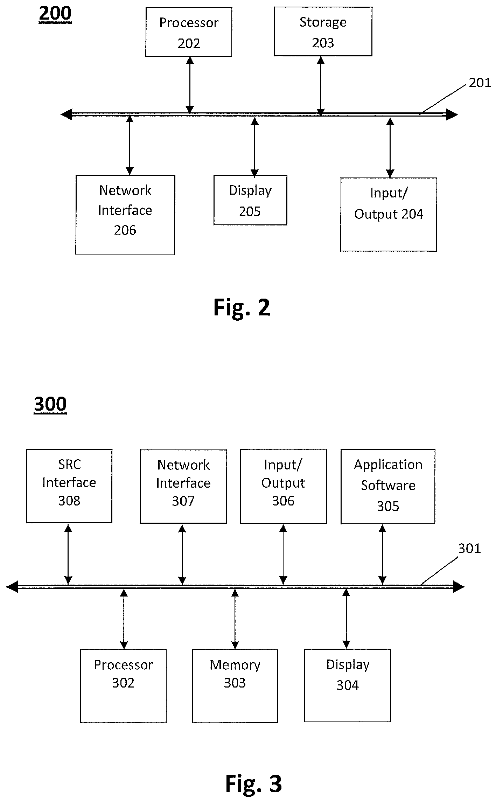

**Fig. 2** shows an exemplary constitution of a computing device that can be configured (for example, through software) to operate (at least in part) as the server 104 of Figs. 1C-1D and/or as the cloud server 106 of Fig. 1D. The apparatus 200 includes a processor (or central processing unit) 202, memory or storage 203, input/output (e.g., keyboard, mouse, etc.) 204, display 205, network interface 206, which communicate with each other by way of a system bus 201. The processor 202, memory/storage 203, input/output 204, display 205 and network interface 206 are conventional, and therefore in order to avoid obfuscating the inventive aspects of this disclosure, such conventional aspects are not discussed in detail herein.

The apparatus 200 includes the network interface 206 for communications through a network, such as communications through the network 107. However, it should be appreciated that the subject matter of this disclosure is not limited to such configuration. For example, the apparatus 200 may communicate with client terminals through direct connections and/or through a network to which some components are not connected. As another example, the apparatus 200 does not need to operate as a server that services terminals, but rather may communicate with the devices on a peer basis, or in another fashion. The apparatus 200 is not limited to a server or computer, but can be manifested in any of various devices that can be configured to communicate over a network and/or the Internet.

An exemplary constitution of the mobile device 101 of Figs. 1A-1D is shown schematically in **Fig. 3****.** In **Fig. 3**, terminal 300 includes a processor (or central processing unit) 302 that communicates with a number of other components, including memory 303, display 304, application software 305, input/output (such as keyboard, mouse, touchpad, stylus, microphone and/or speaker with voice/speech interface and/or recognition software, etc.) 306, network interface 307 and short-range communication (SRC) interface 308, by way of an internal bus 301.

The memory 303 can provide storage for program and data, and may include a combination of assorted conventional storage devices such as buffers, registers and memories [for example, read-only memory (ROM), programmable ROM (PROM), erasable PROM (EPROM), electrically erasable PROM (EEPROM), static random access memory (SRAM), dynamic random access memory (DRAM), non-volatile random access memory (NOVRAM), etc.].

The network interface 307 provides a connection (for example, by way of an Ethernet connection or other network connection which supports any desired network protocol such as, but not limited to TCP/IP, IPX, IPX/SPX, NetBEUI, etc.) to the network to which the computer 300 is connected (e.g., network 107 of Figs. 1A, 1C and 1D).

The SRC interface 308 can be a combination of one or more hardware provisions (e.g., radio antenna) and system software components [e.g., a Bluetooth subsystem, an NFC (near field communication) subsystem, an infrared communication subsystem, etc.] that enables the terminal 300 to conduct direct, peer-to-peer, point-to-point communication with another device having complementary SRC provisions.

Additional aspects or components of the terminal 300 (and components thereof) are conventional (unless otherwise discussed herein), and in the interest of clarity and brevity are not discussed in detail herein. Such aspects and components are discussed, for example, in "How Computers Work", by Ron White (Que Corporation 2007), and "How Networks Work", by Frank J. Derfler, Jr. and Les Freed (Que Corporation 2004), the entire contents of each of which are incorporated herein by reference.

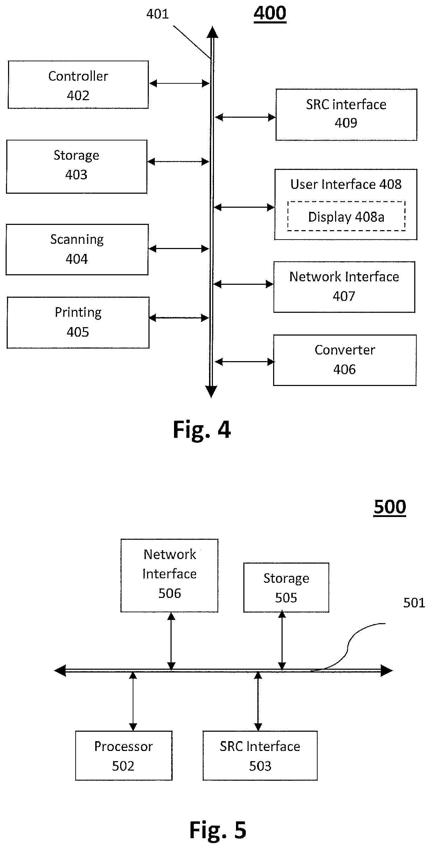

**Fig. 4** shows a schematic diagram of a configuration of an output device as an MFP (multi-function printer or multi-function peripheral) device. The output device 400 shown in Fig. 4 includes a controller 402, and various elements connected to the controller 402 by an internal bus 401. The controller 402 controls and monitors operations of the output device 400. The elements connected to the controller 402 include storage 403 (for example, random access memory, read-only memory, hard disk drive, portable storage media drive such as for optical discs, magnetic discs, magneto optical discs, etc., semiconductor memory cards, combinations of storage media, etc.), printing 405, scanning 404, a format converter 406, a network interface (I/F) 407, a user interface 408 and an SRC interface 409.

Storage 403 can include one or more storage parts or devices [e.g., a read only memory (for example, ROM, PROM, EPROM, EEPROM, etc.), a random access memory (RAM), a hard disk drive (HDD), portable media (for example, floppy disk, optical disc, magnetic discs, magnetooptical discs, semiconductor memory cards, etc.) drives], and program code instructions can be stored in one or more parts or devices of storage 403 and executed by the controller 402 to carry out the instructions. Such instructions can include instructions for performing specified functions (such as printing, scanning, faxing, copying, e-mailing, etc.) of the output device 400, to enable the output device 400 to interact with a terminal, as well as perhaps other external devices, through the network interface 407, and interactions with users through the user interface 408.

The network interface 407 is utilized by the output device 400 to communicate via a network with other network-connected devices such as a terminal, a server and receive data requests, print (or other) jobs, user interfaces, and etc.

The user interface 408 includes one or more electronic visual displays that display, under control of controller 402, information allowing the user of the output device 400 to interact with the output device 400. The electronic visual display can be any of various conventional displays (such as a liquid crystal display, a plasma display device, a cathode ray tube display, etc.), but preferably is equipped with a touch sensitive display (for example, liquid crystal display) and is configured to provide a GUI (graphical user interface) based on information input by an operator of the output device 400, so as to allow the operator to interact conveniently with services provided on the output device 400, or with the output device 400 serving as terminal for accessing electronic data or other content through the network. User interfaces or other contents received through the network via the network interface 407 can be displayed on the display screen.

The display screen does not need to be integral with, or embedded in, a housing of the output device 400, but may simply be coupled to the output device 400 by either a wire or a wireless connection. The user interface 408 may include keys and/or buttons (such as graphical keys or buttons, or other graphical elements, of a GUI on a touchscreen display 408a) for inputting information or requesting various operations. Alternatively, the user interface 408 and the display screen may be operated by a keyboard, a mouse, a remote control, voice recognition, or eye-5 movement tracking, or a combination thereof.

The SRC interface 409 can be a combination of hardware provisions (e.g., radio antenna, etc.) and system software components [e.g., a Bluetooth subsystem, an NFC (near field communication) subsystem, an infrared communication subsystem, etc.] that enables the output device 400 to conduct direct, peer-to-peer, point-to-point communication with another device (e.g., terminal 300) having complementary SRC provisions (e.g., SRC 308).

Since the output device 400 is typically shared by a number of users, and is typically stationed in a common area, the output device 400 preferably prompts the user to supply login credentials or authentication information, such as user name (or other user or group information), password, access code, etc. The user credentials may be stored for the session and automatically supplied for access to other devices through the network. On the other hand, such other devices may prompt the user to supply other user credentials through the user interface.

Other methods of authentication may also be used. For example, the MFD 400 may be equipped with a card reader or one or more biometrics means (such as comparing fingerprints, palm prints, voice or speech, retinas or irises, facial expressions or features, signature, etc.). The MFD 400 may communicate the user credentials, provided in the manners discussed above, to other devices or applications connected to the MFD 400 via a network (e.g., the network 107 of Fig. 1A, 1C and 1D) for determining authorization for performing jobs.

Scanning 404, printing 405, and network interface 407 are otherwise conventional, and therefore, a detailed description of such conventional aspects is omitted in the interest of clarity and brevity. The output device 400 can have any or all of the functions of similar devices conventionally known, such as for scanning, editing and storing images, sending a fax, sending and receiving e-mails with or without attachments, accessing files by FTP or another protocol or facility, surfing the Web, scan-to-folder, scan-to-email, etc. Further, multi-functional devices or multi-function peripheral devices can play a prominent role to convert hardcopy documents to electronic documents.

**Fig. 5** shows an exemplary constitution of a guest print hotspot device 500 that operate as the guest print hotspot device 102 of Fig. 1A-1D. As shown in Fig. 5, guest print hotspot device 500 includes a processor (or central processing unit) 502 that communicates with a number of other components, including (including radio antenna) 503, storage 505 and network interface 506, by way of an internal bus 501.

The SRC interface 503 can be a combination of hardware provisions (e.g., radio antenna, etc.) and system software components [e.g., a Bluetooth subsystem, an NFC (near field communication) subsystem, an infrared communication subsystem, etc.] that enables the guest print hotspot device 500 to conduct direct, peer-to-peer, point-to-point communication with another device (e.g., terminal 300) having complementary SRC provisions (e.g., SRC 308).

The storage 505 can provide storage for program and data, and may include a combination of assorted conventional storage devices such as buffers, registers and memories [for example, read-only memory (ROM), programmable ROM (PROM), erasable PROM (EPROM), electrically erasable PROM (EEPROM), static random access memory (SRAM), dynamic random access memory (DRAM), non-volatile random access memory (NOVRAM), etc.].

The network interface 506 provides a connection (for example, by way of an Ethernet connection or other network connection which supports any desired network protocol such as, but not limited to TCP/IP, IPX, IPX/SPX, or NetBEUI) to a network (e.g. network 107 of Figs. 1A, 1C and 1D).

Additional aspects or components of the router 500 are conventional (unless otherwise discussed herein), and in the interest of clarity and brevity are not discussed in detail herein.

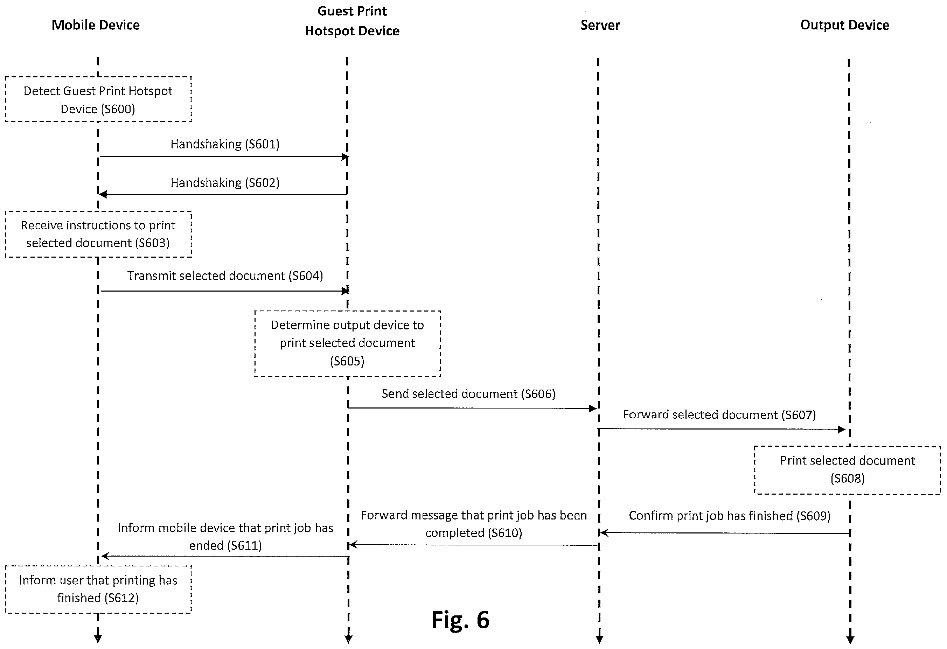

**Fig. 6** shows a process performed in, for example, the system 100C (illustrated in **Fig. 1C**), according to an exemplary embodiment.

When a mobile device (e.g., 101) detects that a guest print hotspot device is within a short-range point-to-point communication range of the mobile device (step S600), the mobile device performs handshaking with the guest print hotspot device (steps S601). In other words, the mobile device may send information (e.g., MAC address, IP address, communication protocols, etc.) regarding itself to the guest print hotspot device. Likewise, the guest print hotspot device also performs handshaking by sending information regarding itself to the mobile device as well (step S602). Afterwards, the mobile device may inform a user of the mobile device that he or she can performing printing at designated output devices (e.g., 103) associated with the guest print hotspot device. In response, the user of the mobile device may receive instructions that the user wishes to print out a certain document (step S603).

Thus, the mobile device transmits the selected document to the guest print hotspot device (step S604). In this case, it may be that the guest print hotspot device is configured to perform direct (e.g., automatic) printing. In other words, the user of the mobile device does not select which output device to print from. Instead, the selection is made by the guest print hotspot device. Such selection may be determined via many factors (e.g., closest output device to user, output devices with the least amount of print jobs, etc.) Once the guest print hotspot device determines an appropriate output device (step S605), the guest print hotspot device sends the selected document along with information regarding the output device to a server (e.g., 104) (step S606). Next, the server forwards the selected document to the output device that was selected by the guest print hotspot device as a print job (step S607).

In response the output device performs the print job by printing out the selected document (step S608). After the output device has finished printing the selected document, the output device sends a message to the server that the print job has been completed (step S609). The server then forwards the message to the guest print hotspot device (step S610). In turn the guest print hotspot device informs the mobile device that the print job has been completed (step S611). In response, the mobile device informs the user that the output device has finished printing the document and that the user can now go pick it up (step S612).

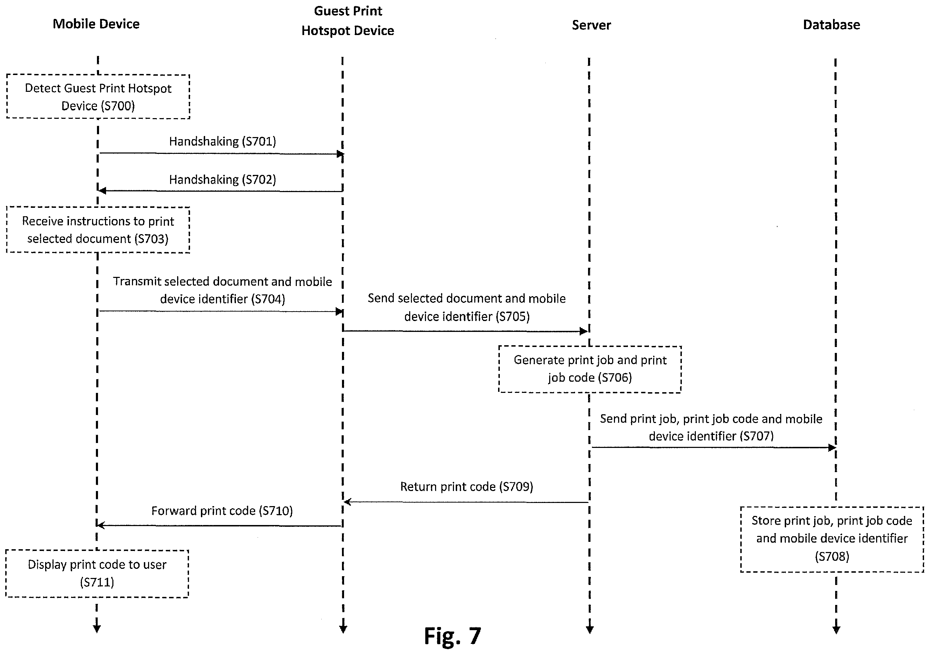

**Fig. 7** shows a process performed in, for example, the system 100C (illustrated in **Fig. 1C**), according to an exemplary embodiment.

When a mobile device (e.g., 101) detects that a guest print hotspot device is within a short-range point-to-point communication range of the mobile device (step S700), the mobile device performs handshaking with the guest print hotspot device (steps S701). In other words, the mobile device may send information (e.g., MAC address, IP address, communication protocols, etc.) regarding itself to the guest print hotspot device. Likewise, the guest print hotspot device also performs handshaking by sending information regarding itself to the mobile device as well (step S702). Afterwards, the mobile device may inform a user of the mobile device that he or she can performing printing at designated output devices (e.g., 103) associated with the guest print hotspot device. In response, the user of the mobile device may receive instructions that the user wishes to print out a certain document (step S703).

Thus, the mobile device transmits the selected document and a mobile device identifier to the guest print hotspot device (step S704). The mobile device identifier may be a unique identifier (e.g., MAC address, IP address, randomly-generated series of numbers and letters, customer number, etc.) to the mobile device that may be associated with the selected document. In other words, for example, it may be that every mobile device is associated with a unique identifier. For every print job that is requested by the user, the mobile device associates the unique identifier with that print job. Next, the guest print hotspot device forwards the selected document and the mobile device identifier to the server (step S705). After receiving the document and the mobile device identifier, the server generates a print job associated with the document and a corresponding print job code (step S706). The print job code (e.g., "4TR4") may be a short series of letters and numbers that can be remembered easily by a user.

Next, the server sends the print job, the print job code and the mobile device identifier to a database (e.g., 105) (step S707). In response, the database stores the print job, the print job code and the mobile device identifier (step S708). In addition, the server returns the print code to the guest print hotspot mobile device (step S709). In turn, the guest print hotspot mobile device forwards the print job code to the mobile device (step S710). Once the mobile device receives the print job code, the mobile device displays the print job code to the user (step S711). In an exemplary embodiment, the print job code generated may be used for multiple print jobs. In other words, for example, if the user submits multiple documents (but through separate print jobs) within a predetermine time span, the server may allow the user to use the same print job code for each of the print jobs created within the same predetermined time span.

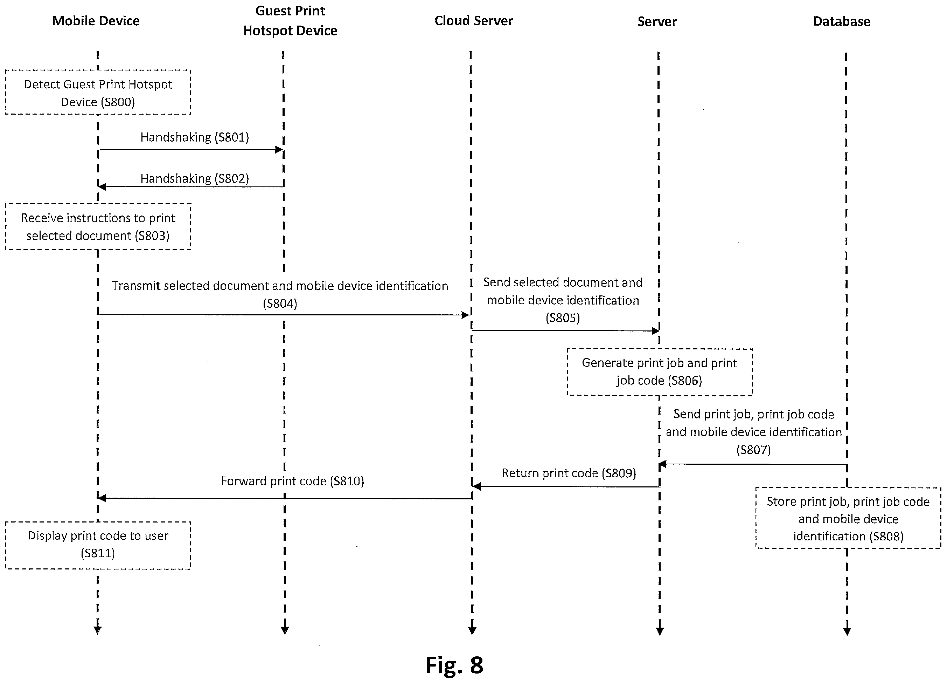

**Fig. 8** shows a process performed in, for example, the system 100D (illustrated in **Fig. 1D**), according to an exemplary embodiment.

When a mobile device (e.g., 101) detects that a guest print hotspot device is within a short-range point-to-point communication range of the mobile device (step S800), the mobile device performs handshaking with the guest print hotspot device (steps S801). Likewise, the guest print hotspot device also performs handshaking by sending information regarding itself to the mobile device as well (step S802). Afterwards, the mobile device may inform a user of the mobile device that he or she can performing printing at designated output devices (e.g., 103) associated with the guest print hotspot device. In response, the user of the mobile device may receive instructions that the user wishes to print out a certain document (step S803).

Thus, the mobile device transmits the selected document and a mobile device identifier to a cloud server (e.g., 106) (step S804). In turn the cloud server sends the selected document and the mobile device identifier to the server (step S805). After receiving the document and the mobile device identifier, the server generates a print job associated with the document and a corresponding print job code (step S806). Next, the server sends the print job, the print job code and the mobile device identifier to a database (e.g., 105) (step S807). In response, the database stores the print job, the print job code and the mobile device identifier (step S808). In addition, the server returns the print code to the cloud server (step S809). In turn, the cloud server forwards the print job code to the mobile device (step S810). Once the mobile device receives the print job code, the mobile device displays the print job code to the user (step S811).

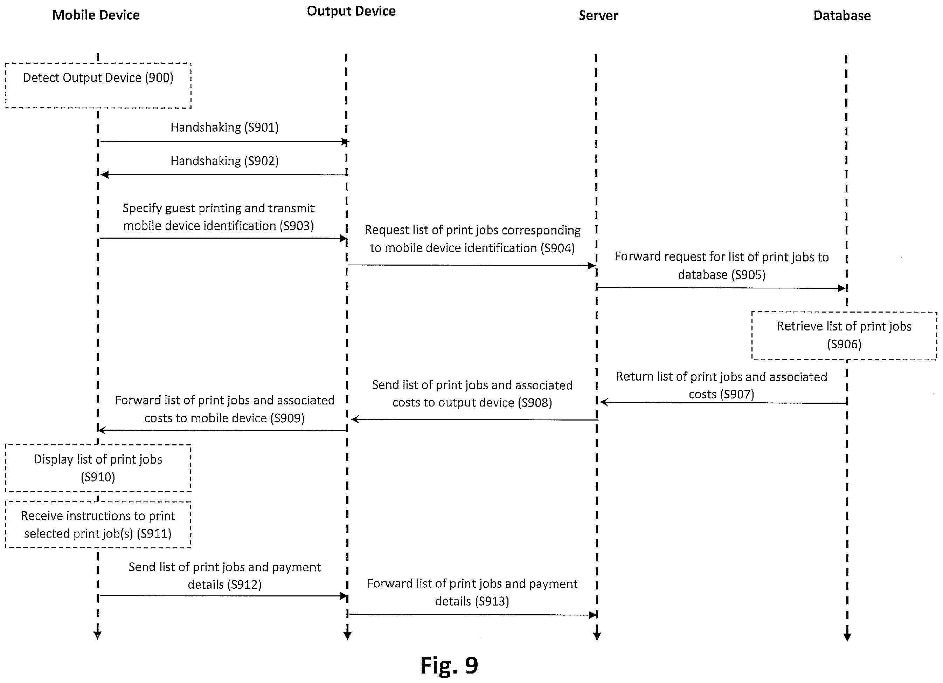

**Fig. 9** shows a process performed in, for example, the system 100C (illustrated in **Fig. 1C**), according to an exemplary embodiment.

After the user has submitted a document to be printed, he or she may go to an output device (e.g., 103) that is selected by either the user or the guest print hotspot device (e.g., 102). When a mobile device (e.g., 101) detects that the output device is within a short-range point-to-point communication range of the mobile device (step S900), the mobile device performs handshaking with the output device (steps S901). Likewise, the output device also performs handshaking by sending information regarding itself to the mobile device as well (step S902). Next, the mobile device specifies that guest printing is to be performed and transmits the mobile device identifier to the output device (step S903). In response, the output device sends a request to the server for a list of print jobs that are associated with the mobile device identifier (step S904). The server forwards the request to the database (step S905). The database retrieves the list of print jobs that are associated with the mobile device identifier (step S906) and returns the list along with the associated costs to the server (step S907). For example, it may be that a user must pay a specified amount of money to perform the corresponding print job.

Next, the server sends the list and the associated costs to the output device (step S908). In response, the output device forwards the list and the associated costs to the mobile device (step S909). Next, the mobile device displays the list of print jobs that are associated with the mobile device identifier along with the associated cost of each print job (step S910). Then, the mobile device receives the selection of the print jobs that the user wishes the output to perform along with payment (e.g., credit card, automatic debit, etc.) of the costs (step S911). In response, the mobile device sends the selected print jobs and the payment details to the output device (step S912). The output device then forwards the selected print jobs and payment details to the server (step S913).

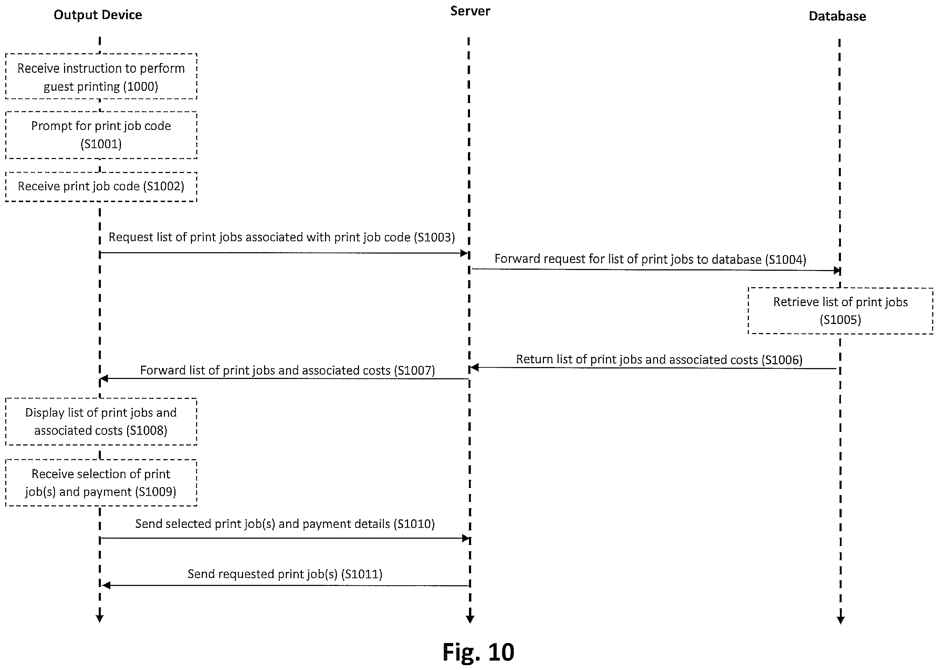

**Fig. 10** shows a process performed in, for example, the system 100C (illustrated in **Fig. 1C**), according to an exemplary embodiment.

After the output device (e.g., 103) has received an instruction to perform printing by a mobile device (e.g., 101) (step S1000), the output device prompts the user of the mobile device for a print job code (step S1001). After receiving the print job code (step S1002), the output device may request a server (e.g., 104) for a list of print jobs associated with the print job code (step S1003). In turn the server forwards the request for a list of print jobs to a database (e.g., 104) (step S1004). In response, the database retrieves the list of print jobs corresponding to the print job code received from the server (step S1005).

Next, the database returns the list of print jobs and their corresponding costs to the server (step S1006). In turn, the server forwards the list of print jobs and their corresponding costs to the output device (step S1007). Next, the output device displays the list of print jobs and their corresponding costs to the user of the mobile device (step S1008). Then, after receiving a selection of print jobs and the corresponding payment from the user (step S1009), the output device sends the selected print jobs and the corresponding payment to the server (step S1010). In response, the server transmits the selected print jobs to the output device (step S1011).

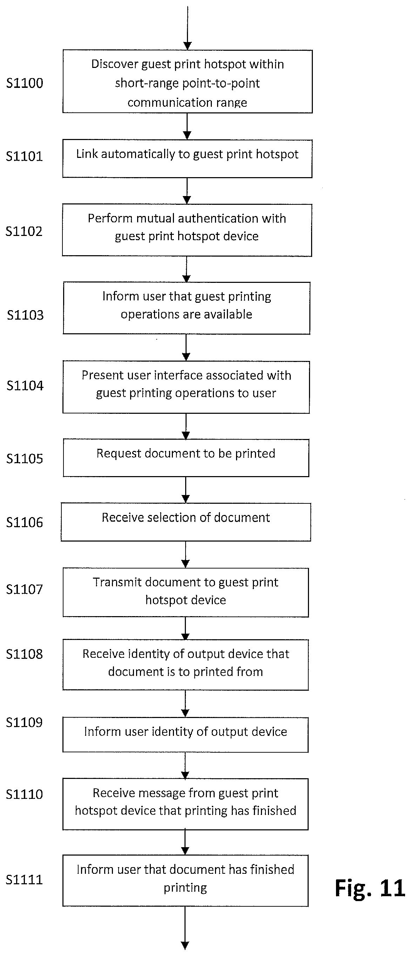

**Fig. 11** shows a method that can performed by a mobile device (e.g., 101 in Figs. 1A-1D), in an exemplary embodiment.

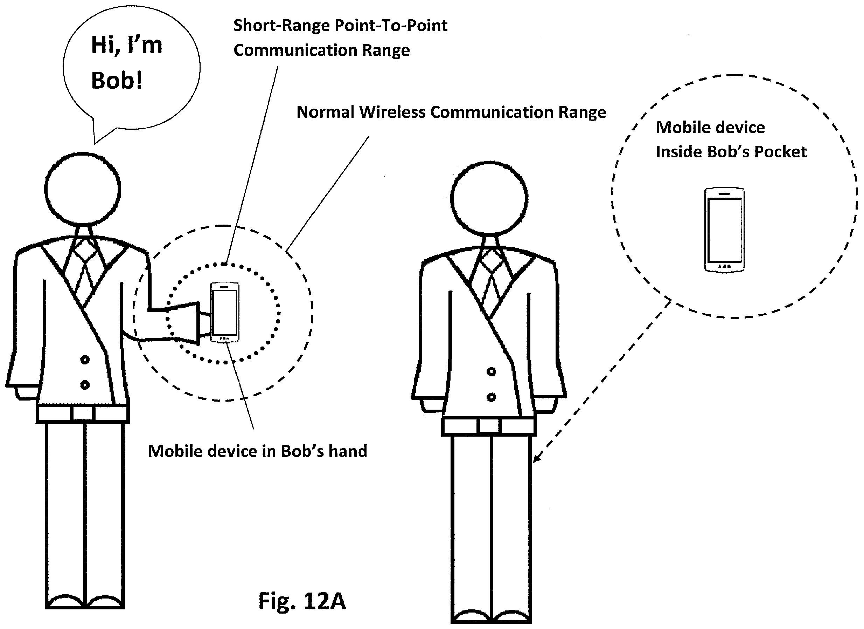

In this example, a mobile device is carried by user Bob in his hand or in his pocket, as shown in **Fig. 12A****.** The mobile device may include a network interface that allows the mobile device to communicate wirelessly with other devices (e.g., printer, MFP, tablet, smartphone, etc.) via various network protocols (e.g., 802.11, Bluetooth). Such normal wireless communication may happen when a normal wireless communication range of the mobile device overlaps with a normal wireless communication range of another device. In other words, the mobile apparatus can register presence of, and communicate with, an output device when the mobile apparatus is within the operating range of the output device. For example, each of the operating ranges may be Bluetooth ranges which allows automatic pairing when the detection regions overlap.

On the other hand, the mobile device may also perform short-range point-to-point range communication with another device as well. Like normal wireless communication, the short-range point-to-point communication can be performed wirelessly. However, the short-range point-to-point communication range is smaller than the normal wireless communication range. In other words, in order for the mobile device to perform communication with another device using a protocol associated with short-range point-to-point communication, the mobile device and the other device may need to be physically in a closer proximity than when normal wireless communication is used. Thus, even if the other device is within the normal wireless communication range of the mobile device, the mobile device does not communicate with the other device, and instead waits for the other device to be in the short-range operation range of the mobile apparatus or *vice versa.*

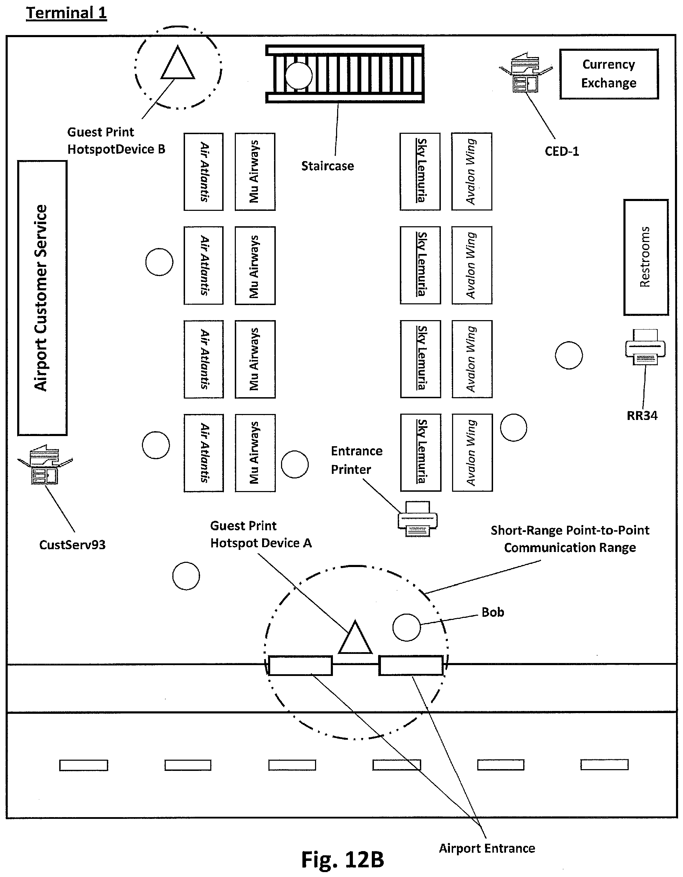

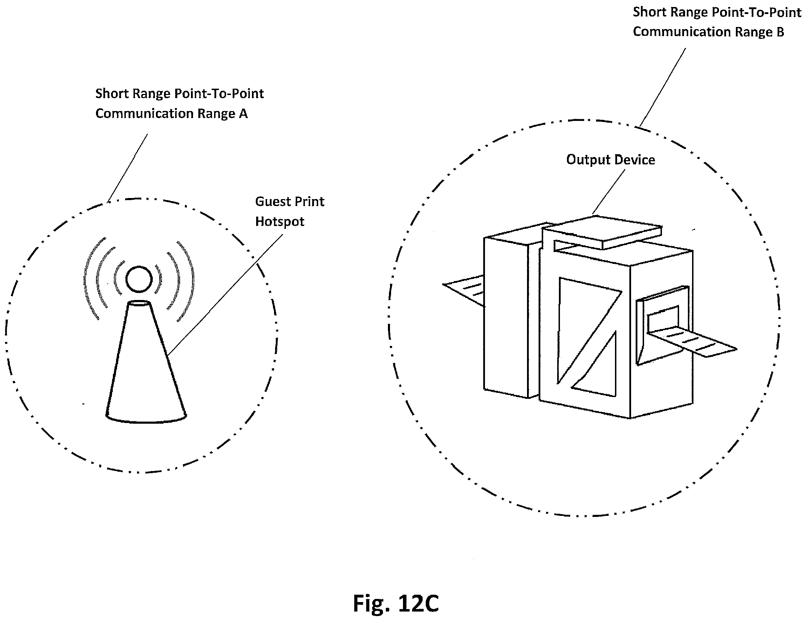

In another exemplary scenario, the user Bob is taking a business trip to meet with various business associates who are in other countries. As a result, the user Bob may take a flight from "Atlantis International Airport" to travel to those countries, and as shown in **Fig. 12B**, the user Bob has entered one of the terminals (e.g., "Terminal 1") of the airport. In this case, the airport may include one or more output devices (e.g., printers, MFPs, facsimile machines, scanners, etc.) disposed through various areas of "Terminal 1". Further, one or more of the output devices (e.g., "CED-1", "CustServ93", "Entrance Printer", "RR34", etc.) in "Terminal 1" maybe associated with one or more guest hotspot print devices (e.g., 104) which is, for example, disposed next to the entrance of "Terminal 1". Like the mobile device, the output devices and the guest hotspot print devices may also communicate via short-range point-to-point communication as shown by their short-range point-to-point communication range in **Fig. 12C****.**

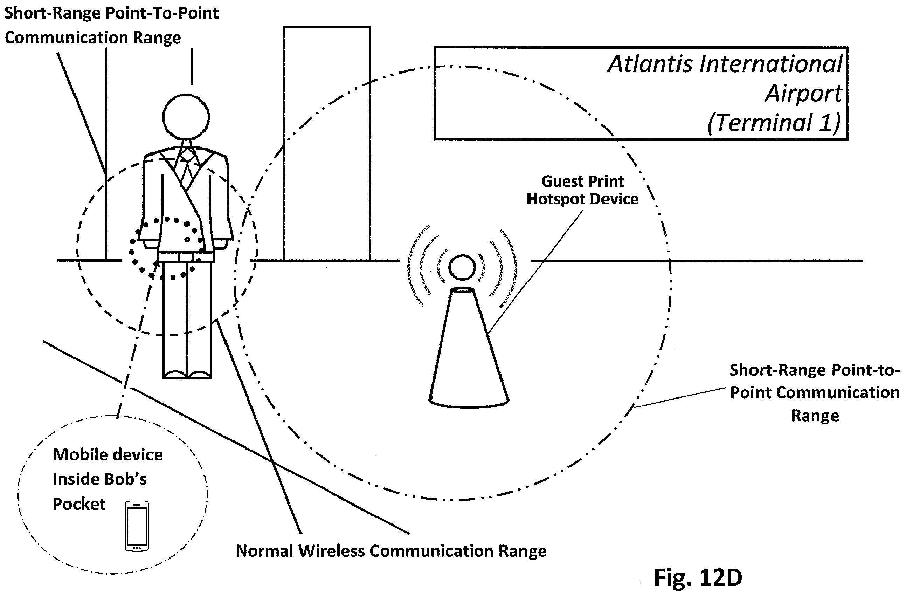

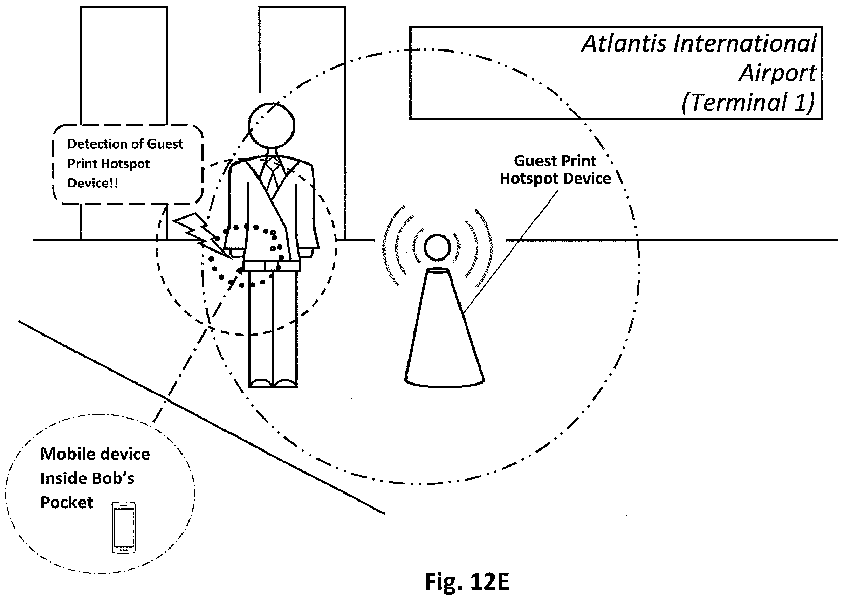

After the user Bob has entered "Terminal 1" as shown in **Fig. 12D**, he may be in visual range of a guest print hotspot device A. However, even though the guest print hotspot device is within the normal wireless communication range of the mobile device, the mobile device does not detect the guest print hotspot device A as the guest print hotspot device is not within the short-range point-to-point communication range of the mobile device. Once the user Bob moves closer to the guest print hotspot device A to a point in which the guest print hotspot device A is within the short-range point-to-point communication range of the mobile device, does the mobile device detect the guest print hotspot device A, as shown in **Fig. 12E****.** It should be noted that the detection is performed automatically meaning that the mobile device can be anywhere in, for example, Bob's pocket, hands, etc., and does not require manual operation by the user Bob.

After the mobile device has detected the guest print hotspot device A, each device may perform preliminary communications with each other (e.g., device recognition). The guest print hotspot device A may determine that the user Bob is new at the airport (or may not have been to the airport in a very long time). For example, the guest print hotspot device A may store in a database (accessible by other guest hotspot devices in the airport), for a predetermined time period, a list of media access control (MAC) addresses of every mobile device that has ever communicated with any of guest print hotspot devices in the airport. Thus, when a particular guest print hotspot device in the airport communicates with a mobile device which has an unrecognizable MAC address, the particular guest print hot spot device may determine that a user of the mobile device is new to the airport.

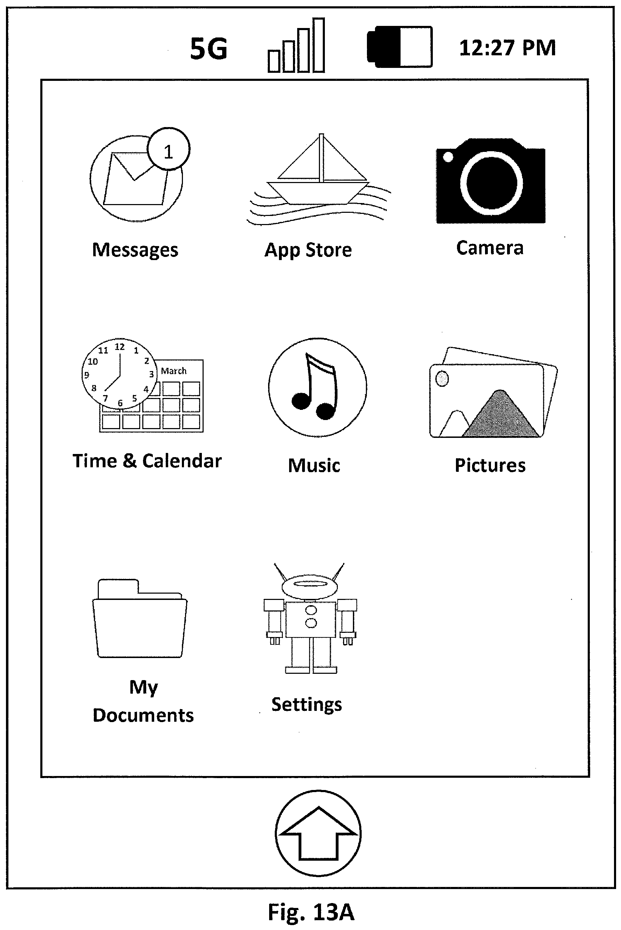

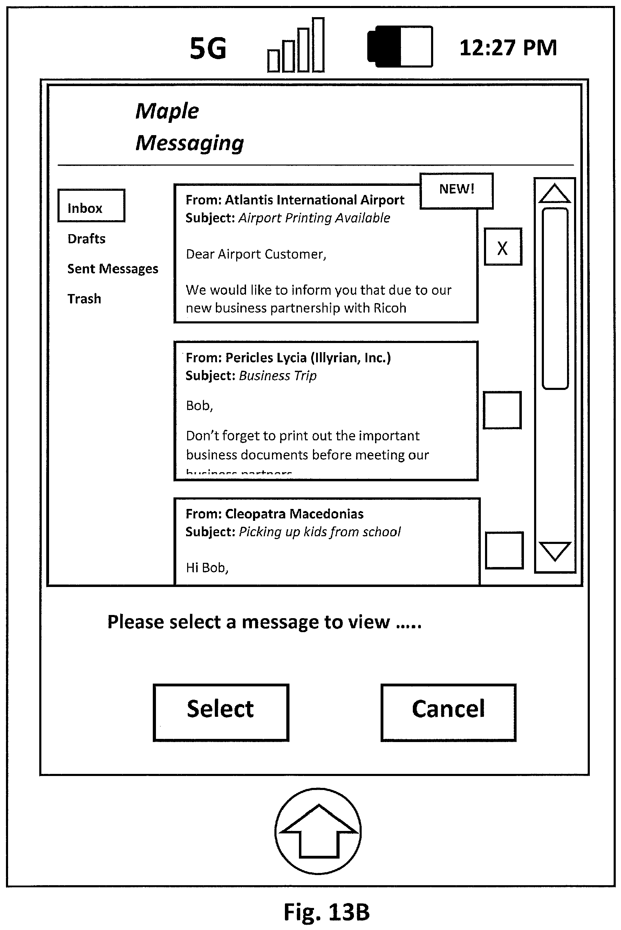

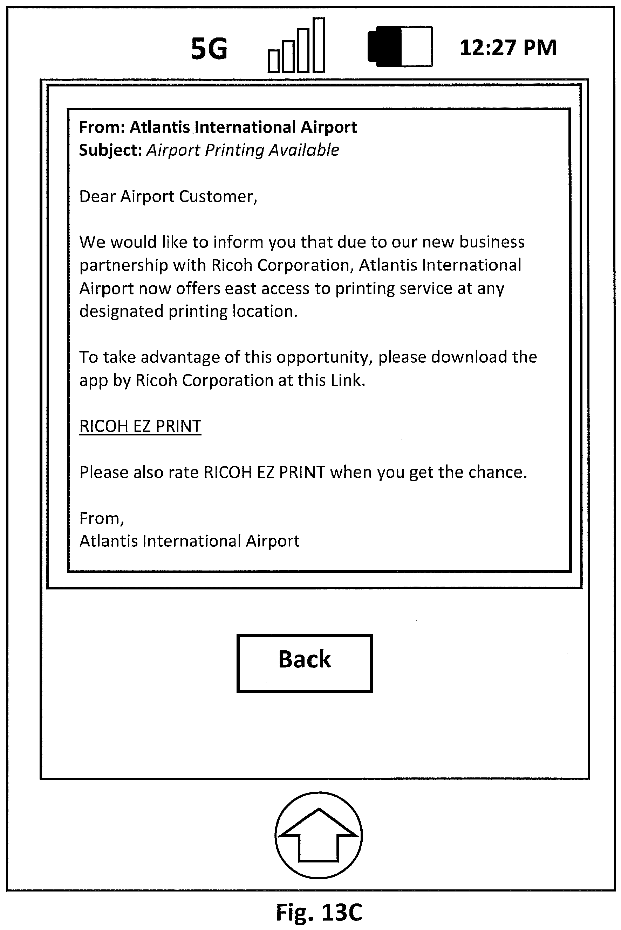

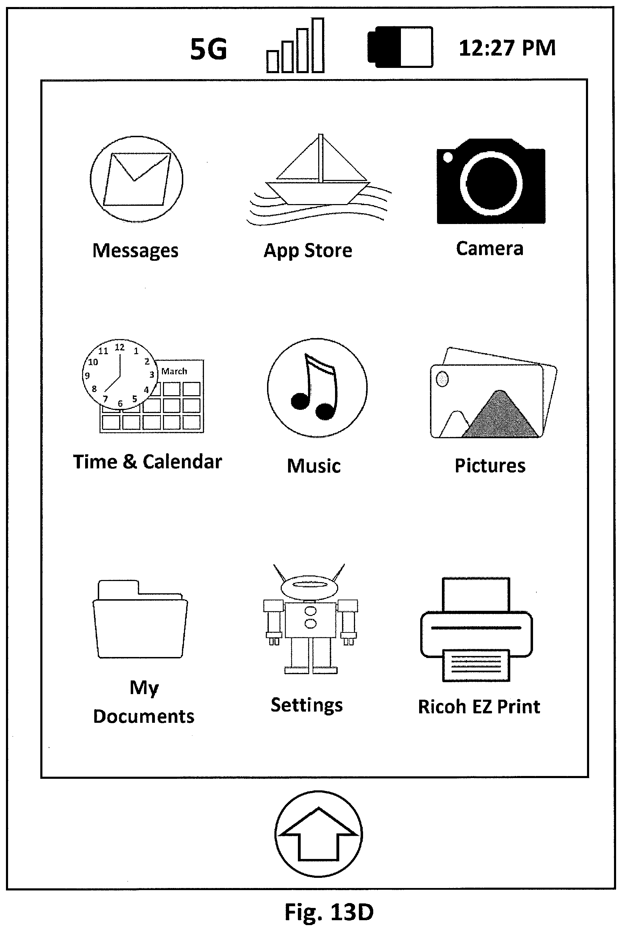

As a result, the guest print hotspot device A may send a message (e.g., e-mail, SMS, etc.) to the mobile device, to inform the user Bob that guests (e.g., customers) of "Atlantis International Airport" can print documents at designated output devices in the airport. The user Bob may be alerted (e.g., ringtone, vibration, etc.) to this message and may pull out his mobile device to see that he has a new message, as shown in **Fig. 13A****.** Next, the user Bob may activate an application on his mobile device to view the new message received from the guest hotspot device, as shown in **Figs. 13B** **and** **13C****.** In this case, the user Bob is informed that he can print at any designated printing location in "Atlantis International Airport" by downloading an application (e.g., "Ricoh EZ Print"). In an exemplary embodiment, it may be that due to a budget surplus, the "Atlantean" government has generously made printing free of charge for all customers of "Atlantis International Airport". In this case, the user Bob may decide to take advantage of this opportunity by downloading the "Ricoh EZ Print" application onto his mobile device as shown in **Fig. 13D****.**

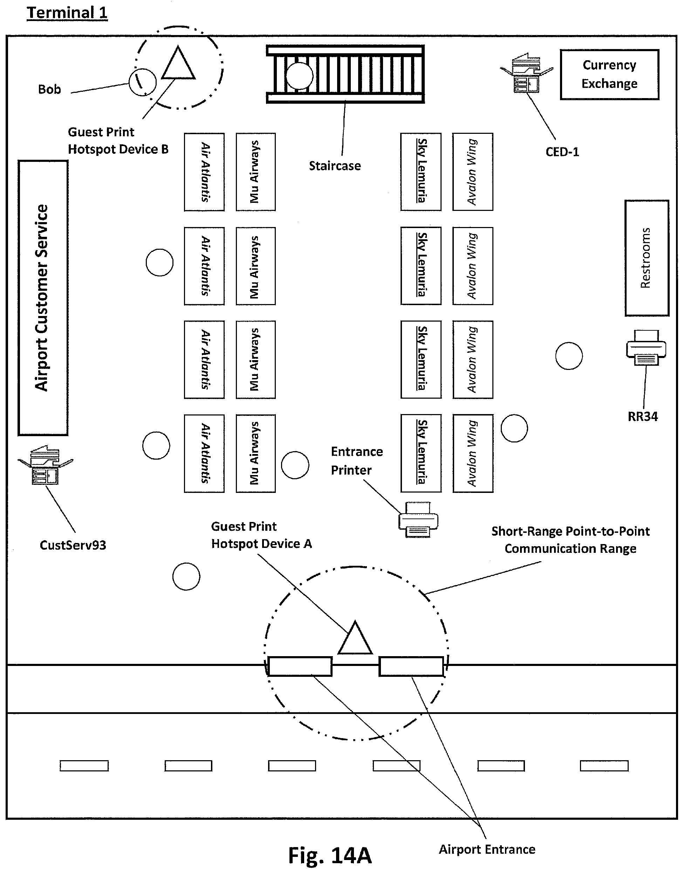

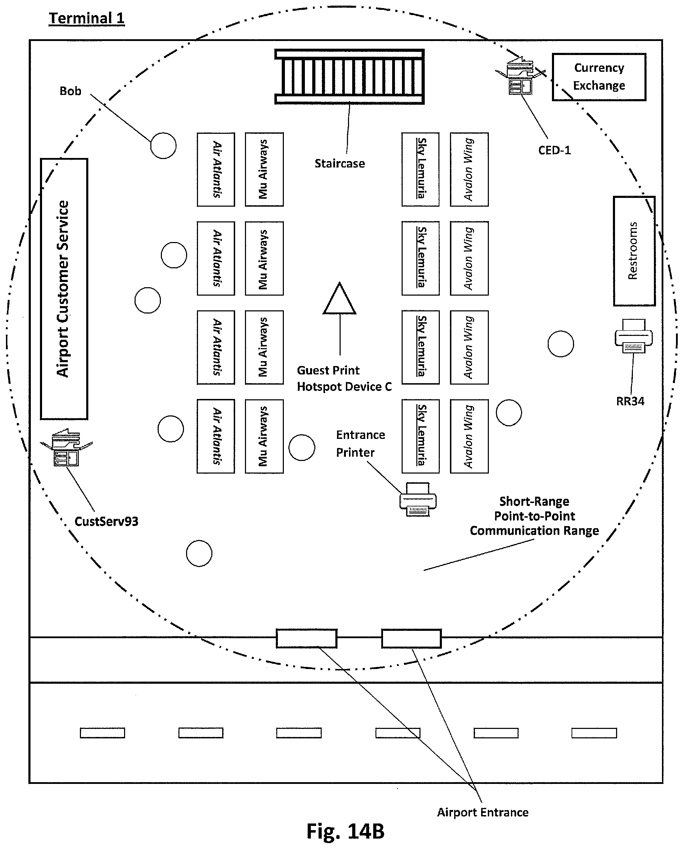

In yet another exemplary scenario, the user Bob may discover that he forgot to print out his return ticket to his home country (e.g., "Atlantean Republic"). However, the user Bob discovers a guest print hotspot device B near a staircase and goes within the short-range point-to-point communication range to allow his mobile device to communicate with the guest print hotspot device B, such as shown in **Fig. 14A****.** In an exemplary embodiment, "Terminal 1" may contain only one guest hotspot print device (in this case, guest print hotspot device C). However, the short-range point-to-point communication range of the guest print hotspot device C may extend to every area of "Terminal 1", such as shown in **Fig. 14B****.** Thus, it does not matter the location that the user Bob is at. So long as he is within "Terminal 1", his mobile device can communicate with the guest print hotspot device C.

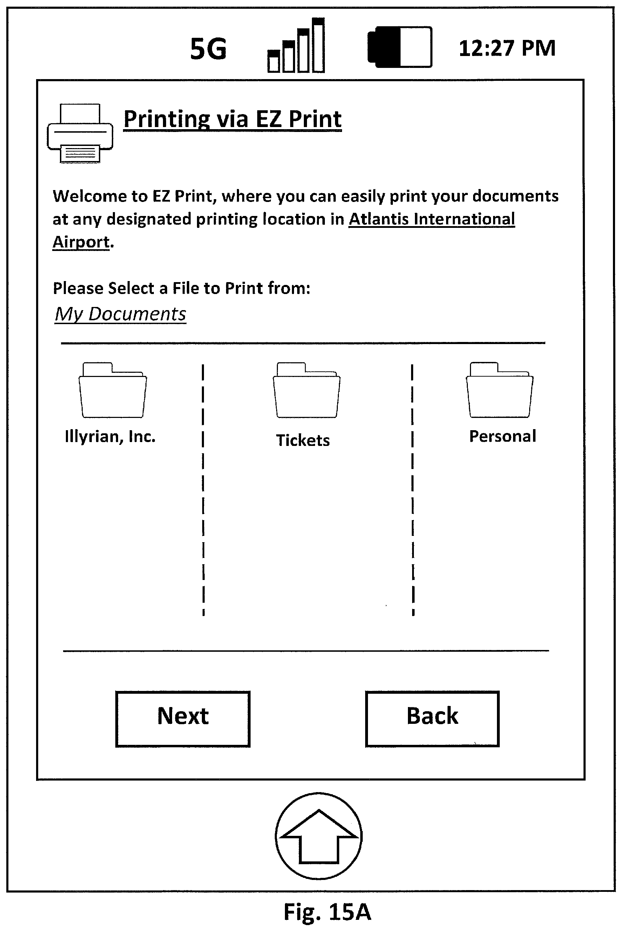

In either case, after the mobile device detects that a guest print hotspot device is within the short-range point-to-point communication range of the mobile device (step S1100), the mobile device links (e.g., connects) automatically with the guest print hotspot device (step S1101). Next, the mobile device performs a mutual verification process with the guest print hotspot device (step S1102). For example, the mobile device may perform preliminary transmissions (e.g., device recognition, exchange of address information, etc.) to establish future communications with the guest print hotspot device. Likewise, the guest print hotspot device may do the same. Afterwards, the mobile device informs the user that the user can perform guest printing at any designated device (step S1103). Then the mobile device presents to the user a user interface that allows the user to perform the process of printing documents to a designated output device (step S1104), such as shown in **Fig. 15A****.**

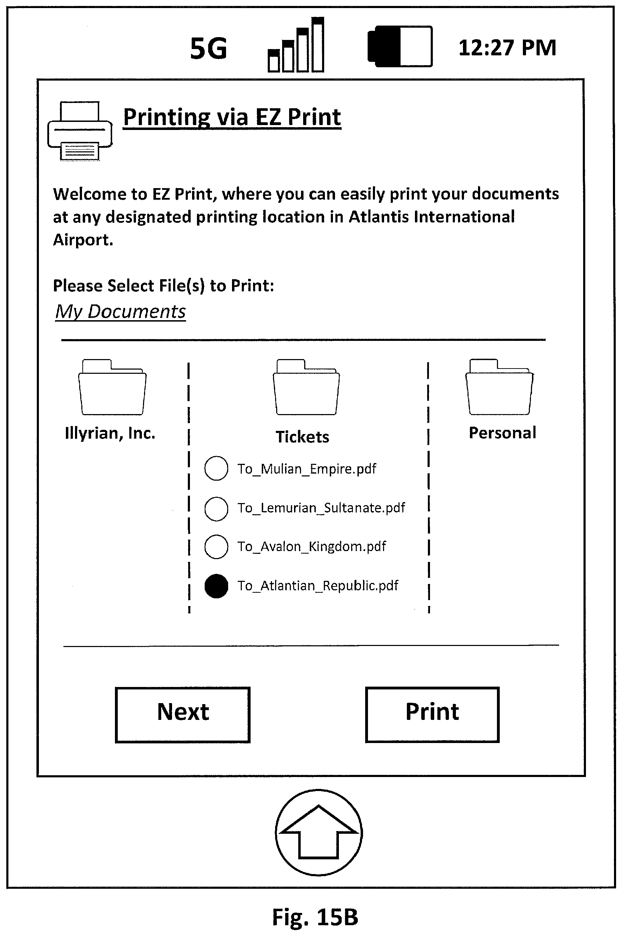

The mobile device may further request the user for one or more documents that the user wishes to print out (step S1105). For example, the mobile device may display different folders. The user Bob may view the contents of a folder by clicking on the selected folder which causes one or more documents to be listed for view, such as shown in **Fig. 15B****.** Since the user Bob needs to print his return ticket, he selects the document "To_Atlantean_Republic.pdf" and activates the "Next" button. After the user is satisfied with the selection of the document (step S1106), he or she may activate the "Print" button which causes the mobile device to transmit the selected document to the guest print hotspot device (step S1107).

In turn the guest print hotspot device selects an output device at which the selected document is to be printed. In other words, in this exemplary embodiment, the user of the mobile device does not perform the selection of the output device. Instead, the guest hotspot print device selects which output device the document (selected by the user) is to be printed from. It should be noted that there may be a plurality of methods by which the guest print hotspot device performs the selection. For example, the guest print hotspot device may select an output device that is closest to the physical location of the user. In another example, the guest print hotspot device may select an output device that is currently not performing any type of operation (e.g., print job) or performing small amounts of print jobs. This way, printing customers at the airport are spread out among the output device which prevents long queues.

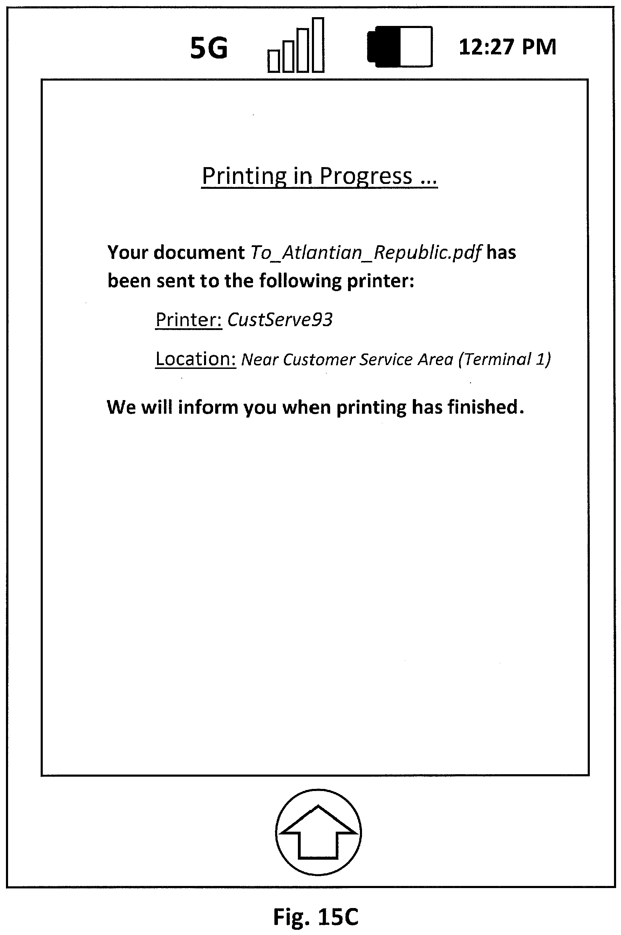

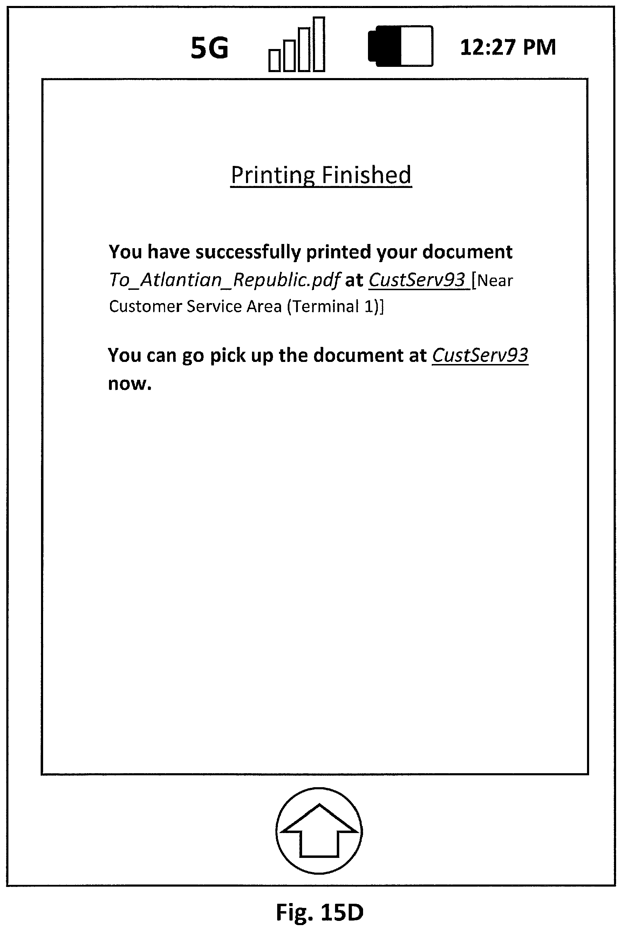

Once the guest print hotspot device selects a particular output device, the guest print hotspot device sends the selected document to the particular output device and informs the mobile device of the identity (including location) of the particular output device (step S1108). Next, the mobile device informs the user (i) that the selected document has been sent to the particular output device, (ii) the location of the particular output device and (iii) that the mobile device may inform the user when printing has finished (step S 1109). For example, as shown in **Fig 15C**, the guest print hotspot device has sent the document (selected by the user Bob to be printed) to a "CustServ93" output device which is located near the "Customer Service" area of "Terminal 1". After the output device has finished printing the selected document, the output device informs the guest hotspot print device which in turn informs the mobile device (step S1110). In response, the mobile device informs the user via the user interface that printing has finished and that the user can pick up his or her printed hardcopy of the selected document (step S1111), such as shown in **Fig. 15D****.**

In an exemplary embodiment, the mobile device may tell the user to wait before picking up the printed hardcopy of the selected document since the selected output device may be busy printing for another airport customer. Thus, the user is not forced to go to the selected output device and wait there until the selected output device prints out his or her documents. The user may instead perform some other tasks and may only go to the output device when his or her mobile has indicated that printing has finished.

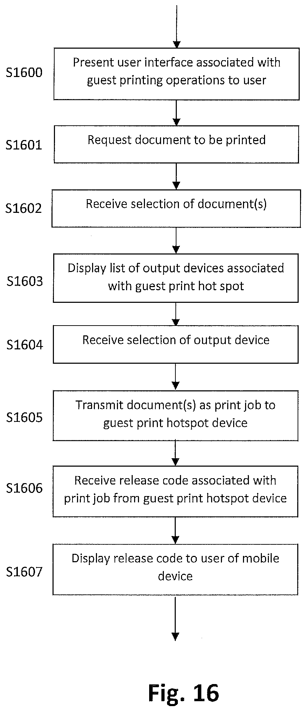

**Fig. 16** shows a method that can performed by a mobile device (e.g., 101 in Fig. 1A-1D) according to an exemplary embodiment.

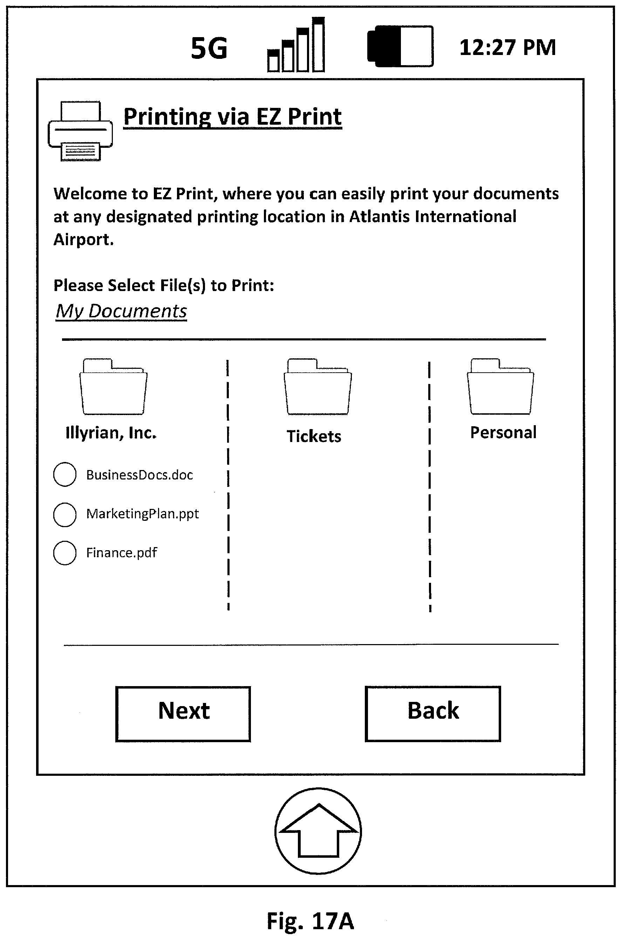

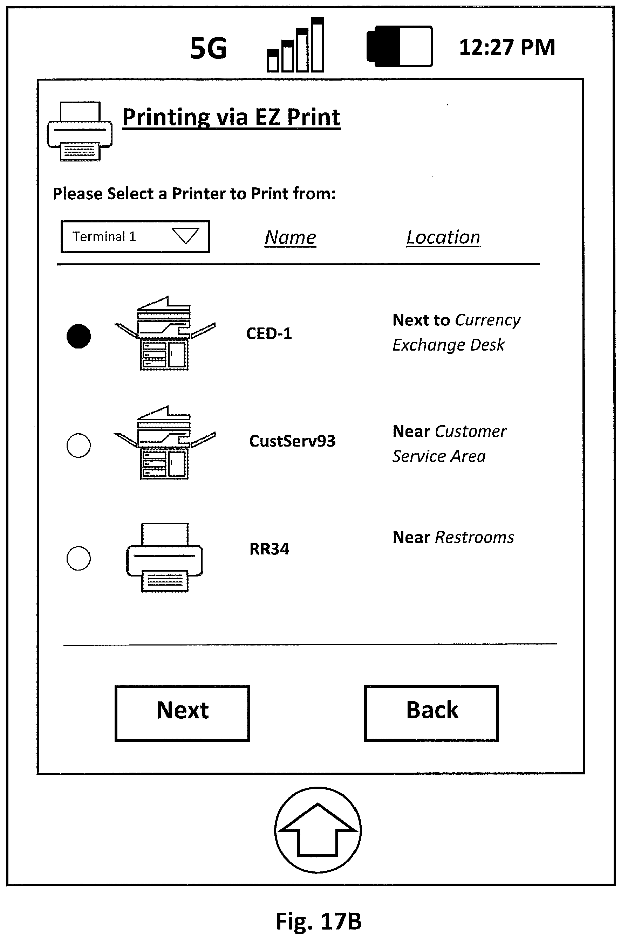

In an exemplary scenario, the user Bob may be allowed to select the output device that he wishes to have his documents printed at. To facilitate this, the user opens up the "Ricoh EZ Print" application on his phone which presents a user interface (step S1600) to request the user Bob to select one or more documents to print (step S1601). For example, the user Bob may select to print the documents "BusinessDocs.doc" and "MarketingPlan.ppt", such as shown in **Fig. 17A****.** After the user Bob is satisfied with his or her selection, he may activate the "Next" button to confirm selection of the documents (step S1602). Next, the mobile device displays a list of output devices, to the user, that are associated with the guest print hotspot device (step S1603), such as shown in **Fig. 17B****.** For example, in this case, the user Bob is presented with a list including the names and locations of the output devices that can print "Bob's" documents. In this case, the user Bob selects "CED-1" output device and activates the "Next" button (step S1604).

In an exemplary embodiment, the user Bob may not have access to all output devices in "Terminal 1" of "Atlantis International Airport". In other words, he may have only access to the output devices "CED-1", "CustServ" and "RR34". He may not have access to the output device "Entrance Printer" which is the reason why "Entrance Printer" is not shown in the list of output devices presented to the user Bob by his mobile device. It may be that "Entrance Printer" can only be used by employees of "Atlantis International Airport" and not by airport customers.

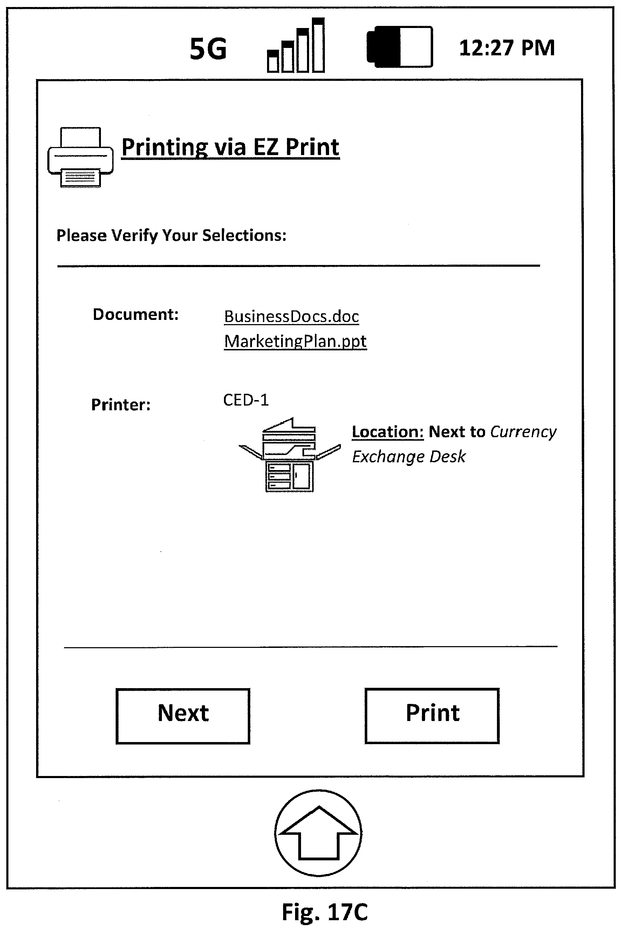

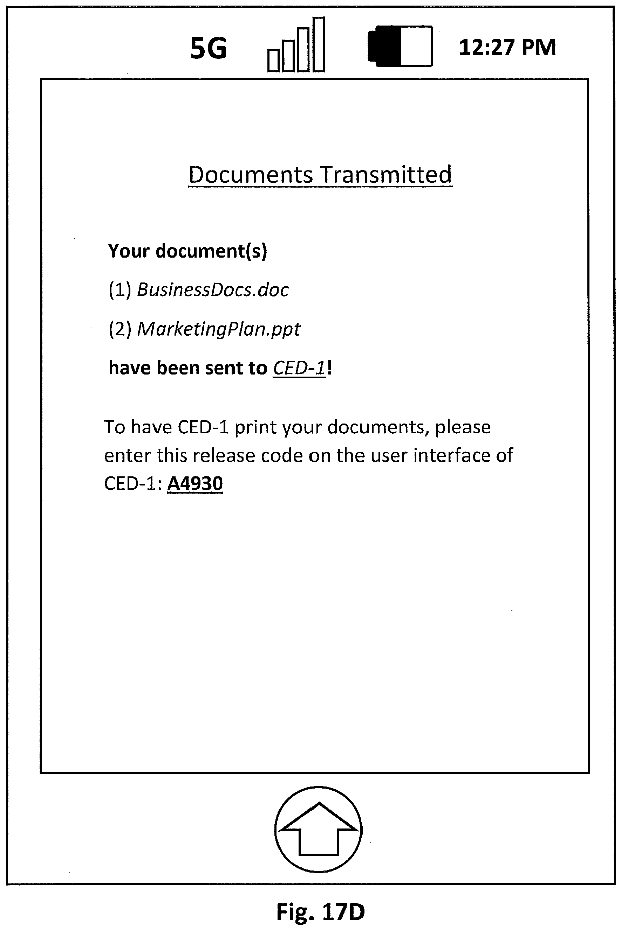

After receiving the selection of the documents and the printer, the mobile device displays a screen to have the user Bob verify his selections, such as shown in **Fig. 17C****.** After the user Bob is satisfied with his selections, he may activate the "Print" button which causes the mobile device to transmit the selected documents to be printed to the guest hotspot print device which in turn forwards the selected documents to the selected output device as a print job (step S1605). In response, the guest print hotspot device creates a release code for the print job and sends it to the mobile device (step S1606). Subsequently, the mobile device informs the user Bob that the selected document has been sent to the selected output device and that he can cause the selected output device to perform printing once he enters in a release code (step S1607), such as shown in **Fig. 17D****.**

In other words, in this exemplary embodiment, every print job (e.g., one or more document sent to an output device via a guest print hotspot device) is given a release code (e.g., series of randomly generated numbers and letters) by the guest print hotspot device, the release code being shown to the user via the mobile device. When the user has selected a particular document to print, the particular document is sent to the output device and stored there (e.g., not yet printed). Once the user has approached the output device and inputted the release code on a user interface of the output device, does the output device perform the print job.

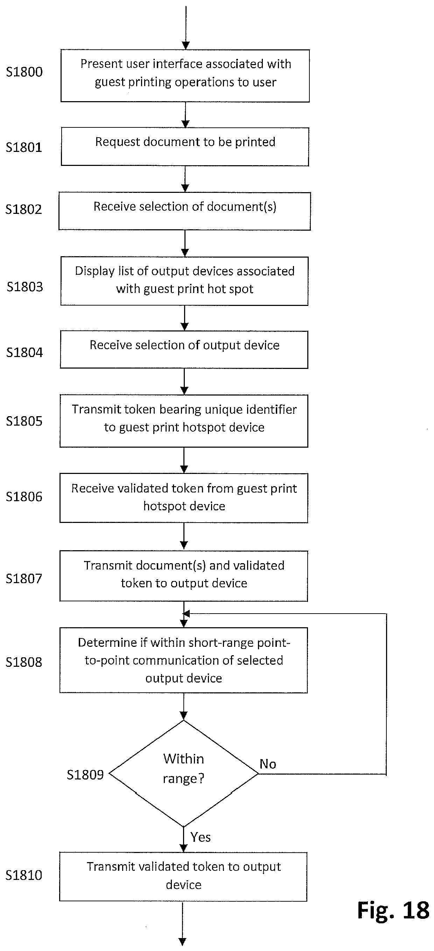

**Fig. 18** shows a method that can performed by a mobile device (e.g., 101 in Fig. 1A-1D) according to an exemplary embodiment.

In an exemplary scenario, the user Alice may be a flight attendant for an airline called "Sky Lemuria". For every scheduled flight for which the user Alice is scheduled to be a flight attendant, she performs duties at a ticket counter attendant for such scheduled flight (e.g., taking tickets from the passengers going on the scheduled flight, before going on the plane). Thus, the user Alice may perform ticket counter duties at different airports in various cities, depending on which flight she is scheduled to be a flight attendant for. In this case, "Sky Lemuria" may be in partnerships with various airports (such as "Atlantis International Airport") that "Sky Lemuria" offers flights from, to allow employees of "Sky Lemuria" to access designated printers at such airports. Since the user Alice is an employee of "Sky Lemuria", she is also granted this privilege as well. In this case, the user Alice may have, on her mobile device, a "Ricoh EZ Print X" application (e.g., a special version of "Ricoh EZ Print" application) which may have been installed by "Sky Lemuria". In other words, the "Ricoh EZ Print X" may include additional features such as registering information (e.g., identity) regarding the user Alice and her mobile device. Further, the "Ricoh EZ Print X" application may also include a budget (e.g., $100.00) to limit use of output devices at the airports.

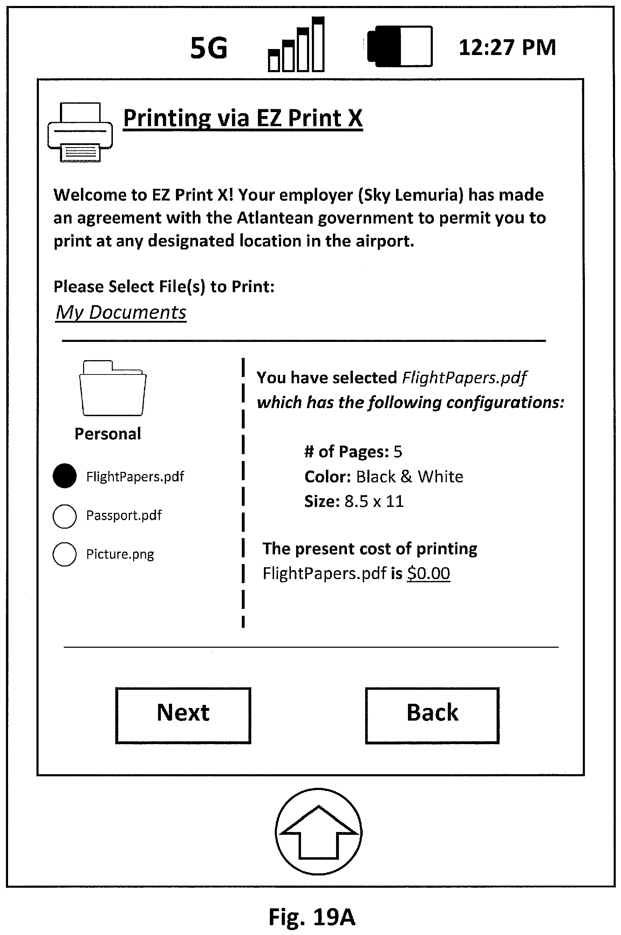

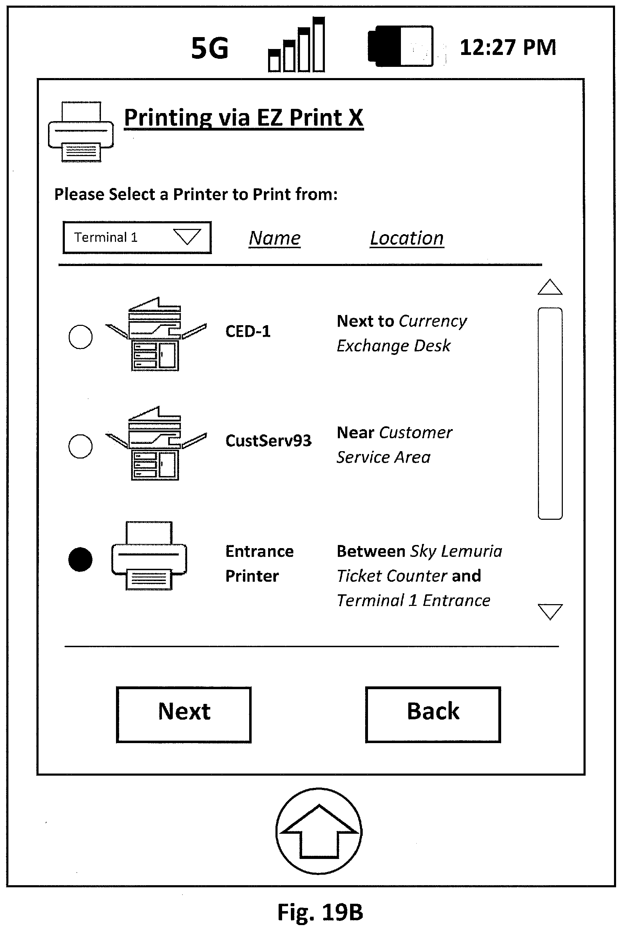

However, the user Alice may have forgotten to print out her flight papers (required for all "Sky Lemuria" flight attendants) for a scheduled flight to the "Mulian Empire", before entering "Atlantis International Airport". Thus, to facilitate use of the output devices at "Atlantis International Airport", the user Alice may open up the "Ricoh EZ Print X" application on her mobile device which causes the mobile device to presents a user interface to the user Alice (step S1800), such as shown in **Fig. 19A****.** The user interface of the "Ricoh EZ Print X" application may request the user Alice to select one or more documents to print (step S1801). For example, the user Alice may select to print the documents "FlightPapers.pdf". Further, it should be noted that when the user Alice selects a specific document, the mobile device displays configurations (e.g., number of pages, color, page size, etc.) that the specific document is to be printed in. In addition, the user Alice is presented with a cost of printing out the specific document. In an exemplary embodiment, the configurations are selected in such a manner that the overall cost or printing for the user Alice is $0.00.

After receiving the selection of the document (step S1802), the mobile device displays to Alice" that a list of output devices that are associated with the guest print hotspot device (step S1803). For example, in this case, the user Alice selects "Entrance Printer" as an output device and activates the "Next" button (step S1804). It may be that the user Alice selects "Entrance Printer" as the closest output device that since "Entrance Printer" is the closest output device to the user Alice. It should be noted that in an exemplary embodiment, the user Alice may have access to a wider range of output devices than other airport customers (e.g., the user Bob). In other words, as previously shown, the user Bob may have access to three (e.g., "CED-1", "CustServ" and "RR34") of the output printers in "Terminal 1". On the other hand the user Alice also has access to all of the output devices that the user Bob has access to (note that the user Alice needs to scroll down to view "RR34") and has access to "Entrance Printer" which is an output device that the user Bob and other airport customers may not have permission to use. In another exemplary embodiment, there are more features available in "Entrance Printer" than in other printers (e.g., "CED-1") at "Terminal 1"

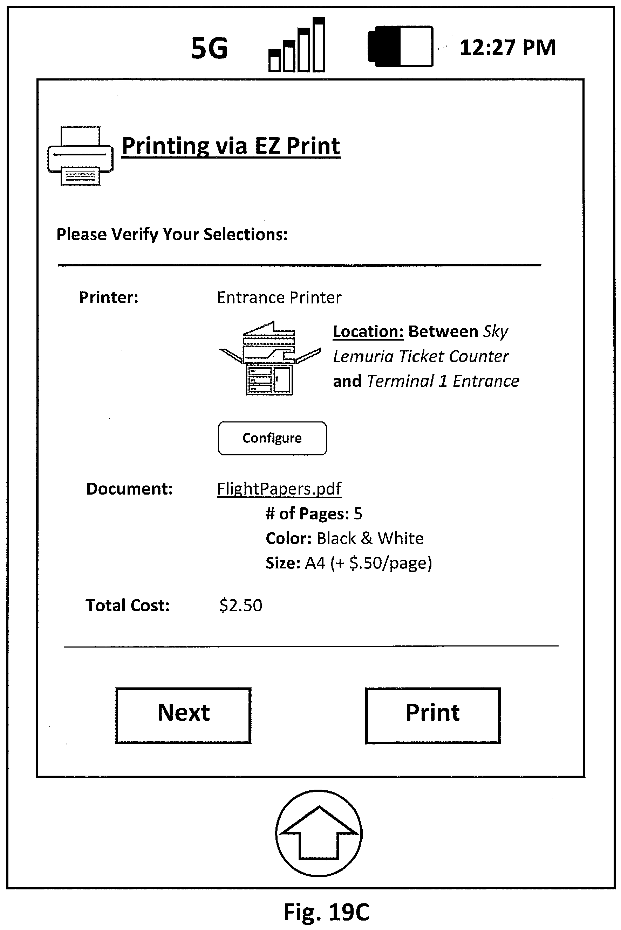

Once the user Alice has performed selection of the document that she wants to print and the output device, the mobile device displays a screen to have the user verify his or her selections, such as illustrated in **Fig. 19C****.** In addition, as shown, the user Alice may also configure (e.g., double-sided, color, stapling, hole-punching, etc.) the selected output device by activating the "Configure" button. It should be noted that it may seem strange as to why the user Alice an employee of "Sky Lemuria" (who has a partnership with "Atlantis International Airport") would have a budget (e.g., $100.00) for printing, while random airport guests have no budget whatsoever. The reason for this is that there may be a set of default configurations (e.g. black-and-white, page size, etc.) that is provided to the airport customers. In other words, these default configurations may be the only configurations that the airport customers can use. Further, these default configurations may cost $0.00 to both the user Alice and the airport customers. On the other hand, since the user Alice is granted special privileges due to "Sky Lemuria's partnership with "Atlantis International Airport", she can change the configurations for printing (something that airport customers cannot do). For example, it may be that if the user Alice changes the paper size from 8.5 x 11 to A4, she would be charged $0.50 for every page that she prints out.

After the user Alice confirms her selection by activating the "Print" button, the mobile device communicates with the guest print hotspot device (assuming that the user Alice is near one or her mobile device can communicate with one). Next, the mobile device sends the guest print hotspot device a token having (i) a unique identifier of the mobile device and (ii) a validation code (e.g., checksum) (step S1805). In one exemplary embodiment, the token may have been created by the "Ricoh EZ Print X" application when the application was installed on "Alice's" mobile device. In another exemplary embodiment, the mobile device may just send the unique identifier without the validation code. In response, the guest print hotspot device validates the token sent by the mobile device and returns the validated token along with address information to access the print service of the output device (step S1806). Subsequently, the mobile device stores the validated token and the address information.

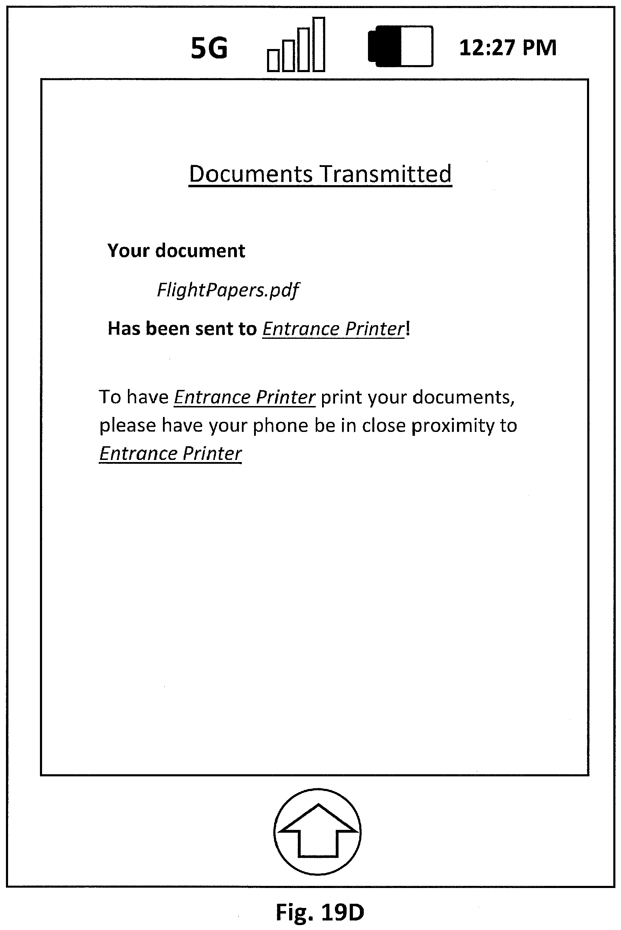

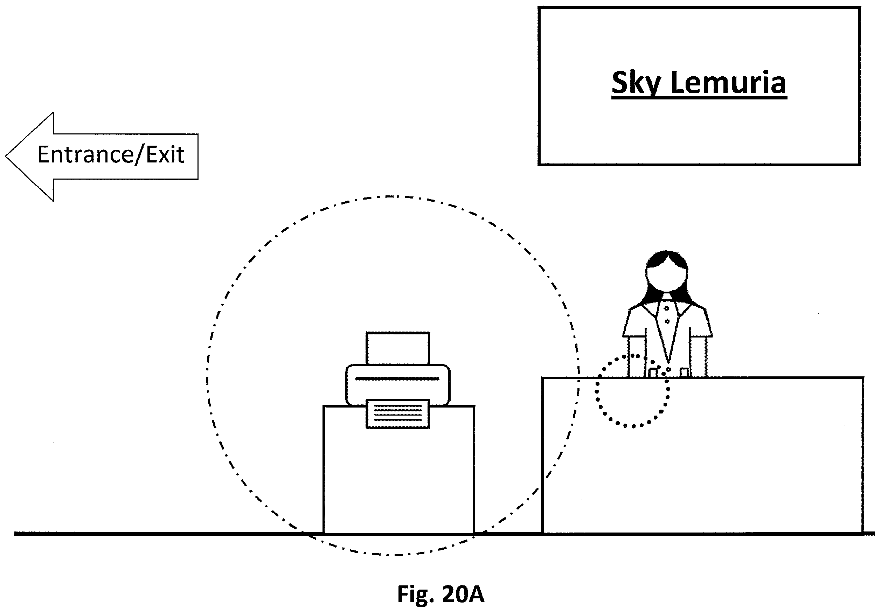

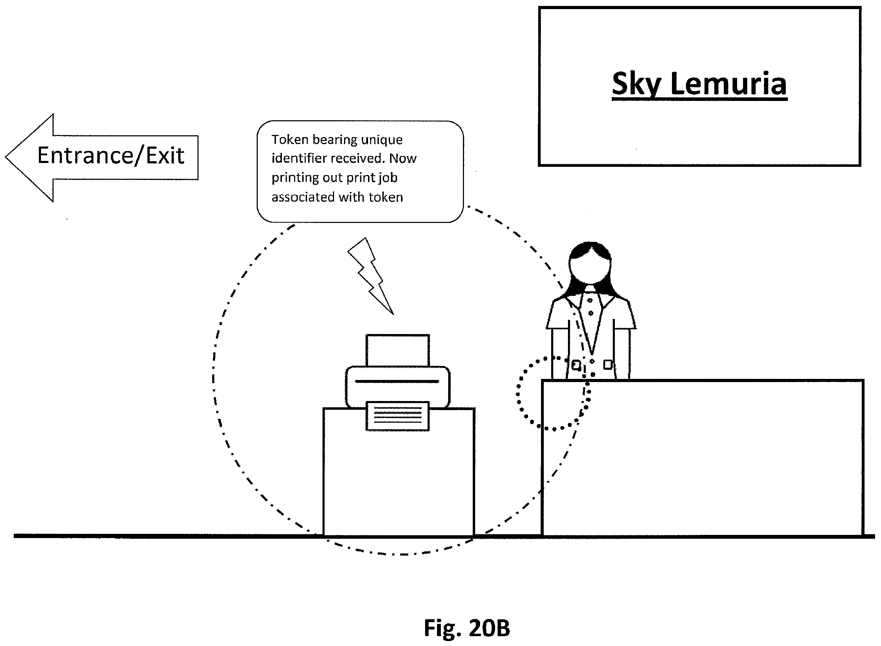

Next, the mobile device informs the user that her document (e.g., "FlightPapers.pdf") has been sent to the output device (step S1807), such as shown in **Fig. 19D****.** The mobile device further informs the user Alice that she needs to be in close proximity to "Entrance Printer" to cause "Entrance Printer" to perform the operation (e.g., print job) of printing out her document. In this case, "Entrance Printer" is right next to the "Sky Lemuria" ticket counter at which the user Alice is currently working, such as illustrated in **Fig. 20A****.** Thus, the mobile device determines when it is in the short-range point-to-point communication range of the output device (e.g., "Entrance Printer") or *vice versa* (step S1808). In the case that the mobile device is not within the short-range point-to-point communication range of the output device (step S1809, no), the mobile device continues to perform the determination. Otherwise, in the case that the mobile device is within the short-range point-to-point communication range of the output device (step S1809, yes), the mobile device transmits the validated token to the output device (step S1810).

In other words, when the user Alice moves towards "Entrance Printer" to the point in which the output device is within the short-range point-to-point communication range of the mobile device. This causes mobile device to send to "Entrance Printer" the validated token previously received by the guest print hotspot device. After receiving, the validated token, the output device proceeds to print out "FlightPapers.pdf". It should be noted that there is no manual interaction by the user Alice on her mobile device or on the output device. In other words, the user Alice merely needs to have her mobile device be at a close enough distance to the output device for the output device to automatically start the print job.

The orders in which the steps are performed in the aforementioned methods are not limited to those shown in the examples of Figs. 6-11, 16 and 18, and may be switched as long as similar results are achieved. Also, it should be noted that the methods or processes illustrated in the examples of Figs. 6-11, 16 and 18 may be implemented using any of the systems described in connection with Figs. 1A-1D.

The aforementioned specific embodiments are illustrative, and many variations can be introduced on these embodiments without departing from the spirit of the disclosure or from the scope of the appended claims. For example, various aspects, features and advantages disclosed herein can applied to automate guest or casual printing, even when the user is not aware of any local provisions of print functionality. Further, although the aspects, features and advantages are discussed herein in connection with a print application, it should be understood that such aspects and feature may be integrated in one or more programs that are not application software *per se,* but may be instead, for example, an operating system component, a snap-in, a plug-in, an add-on, an extension, or another program not normally referenced as an application.

In addition, elements and/or features of different examples and illustrative embodiments may be combined with each other and/or substituted for each other within the scope of this disclosure and appended claims.

## Claims

1. A guest print system comprising:
one or more output devices each having been configured to provide print service including processing a received print job and generating a hardcopy printout based on the received print job;
a guest print hotspot device associated with the one or more output devices and configured to announce via short-range point-to-point communication that print functionality is available; and
a mobile device including a processor and a storage device storing one or more programs of instructions executable by the processor of the mobile device to configure the mobile device to comprise:
a hotspot print connection module to detect presence of the guest print hotspot within a short-range point-to-point communication range of the guest print hotspot, and to establish a connection via short-range point-to-point communication with the guest print hotspot, perform an automated mutual verification process and determine that the print functionality associated with the guest print hotspot is available;
a guest print interface to notify, upon the hotspot print connection module determining that the print functionality associated with the guest print hotspot is available, a user of the mobile device that casual print service is available and in response to user specification of a target document and a print command, cause a print job to be submitted based on the target document to a specified output device amongst the one or more output devices associated with the guest print hotspot.

2. The guest print system as claimed in claim 1, wherein when the mobile device is within the short-range point-to-point communication range of the guest print hotspot, the mobile device automatically connects to the guest print hotspot device and announces to a user of the mobile device that print functionality is available to the user as a guest, and permits the user to submit a specified document to be processed for printing by the specified output device amongst the one or more output devices in the guest print system, without login by the user or configuration of the mobile device to print to the specified output device.

3. The guest print system as claimed in claim 1, wherein when the mobile device is connected to the guest print hotspot device, the guest print hotspot device provides to the mobile device a release code for entry at the specified output device to obtain a hardcopy printout of the print job.

4. The guest print system as claimed in claim 1, wherein in the automated mutual verification process when the mobile device is connected to the guest print hotspot device, the mobile device communicates a token bearing a unique identifier of the mobile device to the guest print hotspot device, and the guest print hotspot device validates the token and returns the validated token, along with address information to access the print service of the output device, to the mobile device, and
wherein the mobile device submits the validated token along with the print job to the output device specified based on the address information received from the guest print hotspot device.

5. The guest print system as claimed in claim 1, wherein in the automated mutual verification process when the mobile device is connected to the guest print hotspot device, the mobile device communicates a unique identifier of the mobile device to the guest print hotspot device, and the guest print hotspot device returns a validated token bearing the unique identifier of the mobile device, along with address information to access the print service of the output device, to the mobile device, and
wherein the mobile device submits the validated token along with the print job to the output device specified based on the address infomation received from the guest print hotspot device.

6. The guest print system as claimed in claim 1, wherein upon completion of the automated mutual verification process, the guest print hotspot device enables the mobile device to submit print jobs to the guest print hotspot device, and in response to receiving a print job from the mobile device, the guest print hotspot device submits the print job to the specified output device and notifies the mobile device of the specified output device to which the print is or has been submitted.

7. The guest print system as claimed in claim 1, wherein upon completion of the automated mutual verification process, the guest print hotspot device communicates to the mobile device a list of the one or more output devices associated with the guest print hotspot device, and the guest print interface of the mobile device provides a user interface for selection by the user of an output device amongst the listed output devices.

8. The guest print system as claimed in claim 1, wherein when the mobile device is within a short-range point-to-point communication range of the specified output device, the mobile device establishes a connection via short-range point-to-point communication with the specified output device, and communicates at least one of (i) a release code associated with the submitted print job or (ii) a token bearing a unique identifier of the mobile device to the specified output device, to obtain a hardcopy printout of the print job.

9. The guest print system as claimed in claim 1, wherein when the mobile device is within a short-range point-to-point communication range of the specified output device, the mobile device establishes a connection via short-range point-to-point communication with the specified output device, and communicates a validated token bearing a unique identifier of the mobile device to the specified output device, and
wherein the output device retrieves all print jobs associated with the unique identifier of the mobile device and generates a hardcopy printout of each retrieved print job associated with the unique identifier.

10. The guest print system as claimed in claim 1, wherein when the mobile device is within a short-range point-to-point communication range of the specified output device, the mobile device establishes a connection via short-range point-to-point communication with the specified output device, and communicates a validated token bearing a unique identifier of the mobile device to the specified output device, and
wherein the output device retrieves all print jobs associated with the unique identifier of the mobile device and communicates a list of the retrieved print jobs to the mobile device, and the guest print interface provides a user interface for selection of specified jobs to be output as hardcopy by the output device.

11. A mobile apparatus configured to notify user of available print service, the mobile apparatus including a processor and a storage device storing one or more programs of instructions executable by the processor of the mobile apparatus to configure the mobile apparatus to comprise:
a hotspot print connection module to detect presence of a guest print hotspot within a short-range point-to-point communication range with the guest print hotspot, and to establish a connection via short-range point-to-point communication with the guest print hotspot, perform a mutual verification process and determine that print functionality associated with the guest print hotspot is available;
a guest print interface to notify, upon the hotspot print connection module determining that the print functionality associated with the guest print hotspot is available, a user of the mobile apparatus that casual print service is available and in response to user specification of a target document and a print command, cause the target document to be submitted to the print service associated with the guest print hotspot.

12. The mobile apparatus as claimed in claim 11, wherein the guest print interface transmits an identifier identifying the mobile apparatus or the user of the mobile apparatus, and receives from the guest print hotspot, for a guest print job generated in response to submission of the target document to the casual print service, a code associated with the print job, for retrieving the guest print job.

13. The mobile apparatus as claimed in claim 11, wherein when the mobile device is within the short-range point-to-point communication range of the guest print hotspot, the mobile device automatically connects to the guest print hotspot device and announces to a user of the mobile device that print functionality is available to the user as a guest, and permits the user to submit a specified document to be processed for printing by the specified output device amongst the one or more output devices in the guest print system, without login by the user or configuration of the mobile device to print to the specified output device.

14. The mobile apparatus as claimed in claim 11, wherein in the automated mutual verification process when the mobile device is connected to the guest print hotspot device, the mobile device communicates a token bearing a unique identifier of the mobile device to the guest print hotspot device, for validation, and receives in return a validated token, along with address information to access the print service of the output device, to the mobile device, and
wherein the mobile device submits the validated token along with the print job to the output device specified based on the address information received from the guest print hotspot device.

15. A method for a user of a mobile apparatus to obtain print service in a guest print system comprising one or more output devices and a guest print hotspot device associated with the one or more output devices, without login by the user or configuration of the mobile device to print to the output devices, the method comprising:
detecting by the mobile device a presence of the guest print hotspot within a short-range point-to-point communication range of the guest print hotspot, and when the mobile device is within the short-range point-to-point communication range of the guest print hotspot, automatically connecting to the guest print hotspot device including performing a mutual verification process, and announcing to the user of the mobile device that print functionality is available to the user as a guest; and
providing a user interface on the mobile device upon connection to the guest print hotspot, to permit the user to submit a specified document to be processed for printing by a specified output device amongst the one or more output devices in the guest print system; and
causing the specified document, in response to user specification of the specified document and a print commend, to be submitted to print service associated with the guest print hotspot.
